# EUROPEAN PATENT SPECIFICATION

(11) **EP 2 600 988 B1**
(45) Date of publication and mention of the grant of the patent: **18.05.2016**
(21) Application number: 11814725.5
(22) Date of filing: 29.07.2011
(51) Int. Cl.: B08B 7/02, B24C 1/04, B24C 3/06

(54) **DRY CLEANING HOUSING, DRY CLEANING DEVICE, AND DRY CLEANING METHOD**
TROCKENREINIGUNGSGEHÄUSE, TROCKENREINIGUNGSVORRICHTUNG UND TROCKENREINIGUNGSVERFAHREN
BOÎTIER DE NETTOYAGE À SEC, DISPOSITIF DE NETTOYAGE À SEC ET PROCÉDÉ DE NETTOYAGE À SEC

(30) Priority: 18.04.2011 JP 2011092448; 04.08.2010 JP 2010175687
(43) Date of publication of application: 12.06.2013
(73) Proprietor: Ricoh Company, Ltd., Tokyo 143-8555 (JP)
(72) Inventor: FUCHIGAMI, Akihiro, Tokyo 143-8555 (JP); OKAMOTO, Yoichi, Tokyo 143-8555 (JP); TSUKAHARA, Kohji, Tokyo 143-8555 (JP)
(74) Representative: Leeming, John Gerard
(86) International application number: PCT/JP2011/067910
(87) International publication number: WO 2012/018100

(56) References cited:
- WO-A1-2009/107826
- JP-A- 4 083 567
- JP-A- H0 459 087
- JP-A- 60 188 123
- JP-A- 2007 029 945

## Description

The present invention relates to a dry cleaning housing, a dry cleaning device, and a dry cleaning method.

A known "dry cleaning method" for performing a cleaning operation with respect to an object to be cleaned (hereinafter referred also to as a "cleaning object") without using cleaning liquid includes causing granular cleaning bodies to be scattered by airflow and bringing them into contact with the cleaning object for cleaning (Patent Documents 1 and 2). Further, a known device performs a dry cleaning operation using flaky cleaning bodies (Patent Documents 3 and 4).

According to the dry cleaning operation described in Patent Documents 1 and 2, a flexible material such as "a sponge material and a chemical clayey material" is used as a material for the granular cleaning bodies. Therefore, an impact on the cleaning object caused when the cleaning bodies are brought into collision-contact with the cleaning object is relatively small, and the front surface of the cleaning object is less likely to be damaged. However, it is difficult to eliminate a "stain" firmly fixed to the cleaning object and takes a long time to perform a sufficient cleaning operation.

Further, according to the dry cleaning operation described in Patent Document 2, the cleaning bodies are brought into contact with the cleaning object through a mesh member. Therefore, the dry cleaning operation appears to be unsuitable for performing "a cleaning operation with respect to a firmly fixed stain," besides the fact that the cleaning bodies are flexible.

As for an image forming apparatus, it is often that "toner fused by heat" is firmly fixed to the development unit of a dry development device using toner particles, and thus a cleaning operation for eliminating such firmly fixed toner is required at an overhaul time or a recycling process.

Further, a mask jig called a dip pallet or a carrier pallet, which is used in a "flow soldering bath process," is coated with flux. However, when the coated flux is accumulated and solidified, the precision of a mask for an "object to be soldered" is degraded and thus adequate "flow soldering" is hindered. Therefore, a cleaning operation for eliminating the flux firmly fixed to the mask jig is required.

Since the "fixing strength" of the firmly fixed toner or the flux is considerably strong, it is difficult to eliminate them with the dry cleaning operation using the "flexible cleaning agents" described in Patent Documents 1 and 2.

The dry cleaning operation described in Patent Documents 3 and 4 can achieve an excellent cleaning effect even if the toner or the flux is firmly fixed to the cleaning object.

However, according to the dry cleaning operation described in Patent Document 3, the cleaning object is set in the "closed cleaning bath" and the "flaky cleaning bodies" are scattered to perform the cleaning operation. Therefore, the cleaning object capable of being cleaned is limited to one that can be set in the cleaning bath.

Further, according to the dry cleaning operation described in Patent Document 4, a cleaning unit itself is small to some extent but a cleaning device itself is likely to be upsized.
Patent Document 1: JP-A-60-188123
Patent Document 2: JP-A-4-83567
Patent Document 3: JP-A-2007-29945
Patent Document 4: JP-A-2009-226394, the closet prior art, corresponding with WO-A1- 2009 /107826

The present invention may provide a novel dry cleaning device capable of satisfactorily eliminating a stain firmly fixed to a cleaning object, a dry cleaning method using the dry cleaning device, and a dry cleaning housing used in the dry cleaning device.

According to the present invention, there is provided a dry cleaning housing as defined in claims 1 and 2, and a dry cleaning method as defined in claim 13.

### Brief Description of Drawings

FIG. 1 is a diagram for describing a first embodiment of a dry cleaning device;
FIGS. 2A and 2B are diagrams for describing a cleaning operation according to the first embodiment shown in FIG. 1;
FIG. 3 is a diagram for describing another embodiment of the dry cleaning device;
FIG. 4 is a diagram for describing an example of the cleaning operation by the dry cleaning device;
FIG. 5 is a diagram for describing part relevant to the example of the cleaning operation shown in FIG. 4;
FIG. 6 is a flowchart for describing the process of the cleaning operation shown in FIGS. 4 and 5;
FIG. 7 is a graph showing an example of results obtained by measuring the flow amount of an inlet when an opening is opened/the flow amount of the inlet when the opening is closed;
FIG. 8 is a diagram for describing another embodiment of the dry cleaning device;
FIGS. 9A through 9C are diagrams for describing still another embodiment of the dry cleaning device;
FIGS. 10A through 10C are diagrams for describing still another embodiment of the dry cleaning device;
FIG. 11 is a diagram for describing still another embodiment of the dry cleaning device;
FIG. 12 is a diagram for describing still another embodiment of the dry cleaning device;
FIG. 13 ,is a diagram for describing still another embodiment of the dry cleaning device;
FIGS. 14A and 14B are diagrams for describing still another embodiment of the dry cleaning device;
FIGS. 15A and 15B are diagrams showing a modification of a cleaning housing;
FIGS. 16A and 16B are diagrams for describing still another embodiment of the dry cleaning device;
FIGS. 17A and 17B are diagrams showing a state where an attachment is removed from an opening;
FIGS. 18A through 18C are perspective views showing modifications of the inlet;
FIG. 19 is a perspective view of the attachment attached to the opening;
FIGS. 20A through 20E are relevant-part cross sectional views showing the configurations of the respective attachments;
FIGS. 21A and 21B are diagrams showing a state where the angle of airflow via the inlet is changed when the attachments shown in FIGS. 20C and 20D are used;
FIGS. 22A through 22D are schematic views showing patterns when a flaky cleaning medium is brought into collision-contact with a cleaning object; and
FIG. 23 is a graph showing the distribution of the mechanical properties of the respective cleaning media.

### Best Mode for Carrying out the Invention

Next, a description is given of embodiments of the present invention.

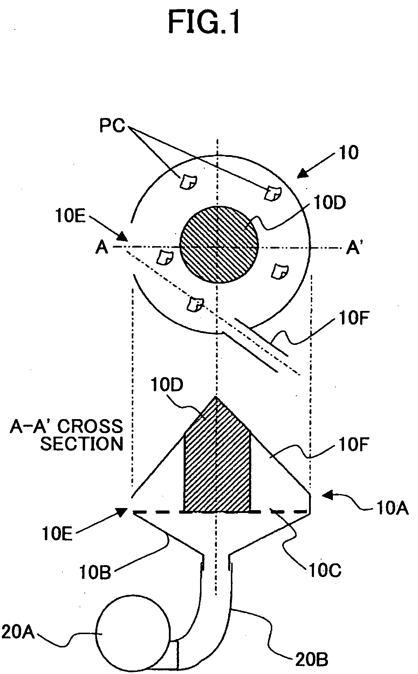

FIG. 1 is a diagram for describing a first embodiment of a dry cleaning device.

In FIG. 1, reference symbol 10 denotes a dry cleaning housing. Hereinafter, the dry cleaning housing is simply referred to as a "housing."

As is clear from upper and lower views in FIG. 1, the housing 10 is formed in such a manner that cone-like hollow bodies opposite in direction are joined together at their bottom surface. In the lower view in FIG. 1, a portion denoted by reference symbol 10A is referred to as an "upper housing" and a portion denoted by reference symbol 10B is referred to as a "lower housing." Such designations are used for the sake of convenience but are not necessarily related to actual upper and lower directions.

The upper housing 10A and the lower housing 10B are integrally formed.

The material of the housing 10 is not particularly limited, but the housing 10 is preferably made of a metal substance such as "aluminum or stainless steel" in order to prevent the adhesion of foreign matter and its consumption due to friction with a cleaning medium. Alternatively, the housing 10 may also be formed by resin molding or the like using a "resin."

Further, the inner surface of the housing 10 is preferably smooth in order to reduce the attenuation of rotating airflow inside the housing 10, which is also applied to other embodiments to be described below.

Between the upper housing 10A and the lower housing 10B, a plate-like porous unit 10C is provided at the bottom surfaces of the housing 10A and 10B. Hereinafter, the porous unit 10C is referred to as a "separation plate 10C."

Inside the upper housing 10A, a cylindrical inner cylinder member 10D is provided as part of the housing 10 so as to use the conical axis of the upper housing 10A as a "common axis," and the "lower part" of the inner cylinder member 10D in FIG. 1 is brought into contact with the separation plate 10C.

The top part (lower part of FIG. 1) of the lower housing 10B is cylindrically opened to form a "suction port" and connected to suction equipment 20A via a suction duct 20B.

The suction equipment 20A and the suction duct 20B constitute a "suction unit." As the suction equipment 20A, a vacuum motor, a vacuum pump, an object that "generates low pressure by airflow or a stream of water," or the like may be used as occasion demands.

The suction duct 20B may be a "fixed type that maintains its given shape" or a type that can fold a flow path arbitrarily.

The upper housing 10A has a "cylindrical shape" at its part close to the bottom surface, and an opening 10E is formed in part of the cylindrical part. The opening 10E is a shape obtained by cutting the cylindrical part with a "plane cross section parallel to the cylinder shaft", and formed into a "rectangular shape."

Further, the cylindrical part is penetrated by a hollow cylinder 10F, and the hollow cylinder 10F is integrated with the upper housing 10A.

Hereinafter, the hollow cylinder 10F is referred to as an "inlet 10F."

The inlet 10F is parallel to the separation plate 10C, has its longitudinal direction inclined with respect to the radius direction of the cylindrical part of the upper housing 10A, has a direction substantially parallel to the tangent line of the peripheral surface of the inner cylinder member 10D, and has its exit opened in the upper housing 10A so as to face the opening 10E.

In other words, the inside of the inlet 10F forms a "ventilation path."

In this embodiment, the inlet is single. However, it is also possible to arrange two or more inlets depending on the shape and the size of the housing.

The separation plate 10C is a "disc-like member such as punching metal having holes such," and provided at a boundary between the lower housing 10B and the upper housing 10A to separate the inside of the upper housing 10A from the inside of the lower housing 10B as shown in the lower view of FIG. 1.

The separation plate 10C is not limited to the above one, but is only required to be a porous type having "fine pores with a diameter that does not allow a cleaning medium to pass through but allow air and dust (a stain separated from a cleaning object) to pass through." The shape of the fine pores is not limited to a circle but may be a slit. Also, it is possible to use a mesh-like plate as the separation plate 10C.

The separation plate 10C is only required to "have a smooth surface," and resin, metal, or the like may be appropriately selected as the material of the separation plate 10C.

In the upper view of FIG. 1, reference symbol PC denotes a "flaky cleaning piece," and an aggregation of flaky cleaning pieces PC forms the "cleaning medium."

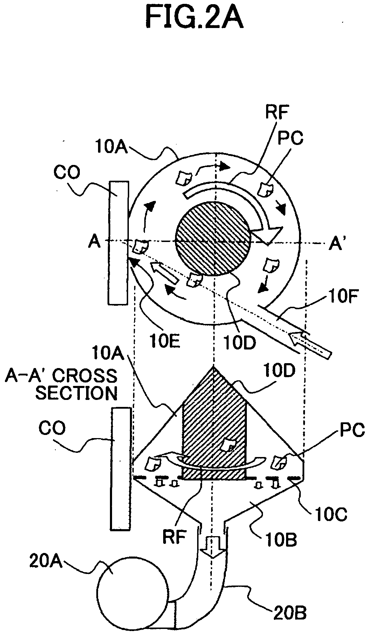

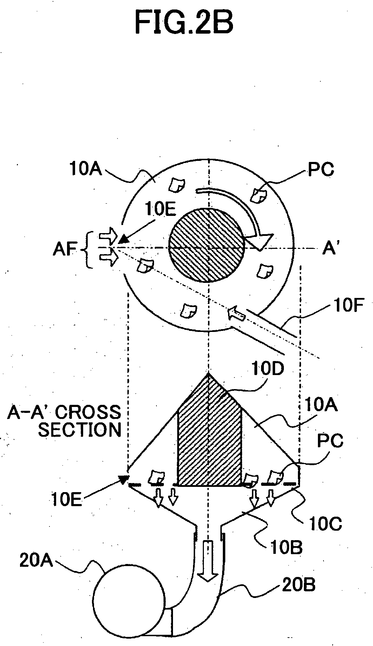

With reference next to FIGS. 2A and 2B, a description is given of an operation for cleaning a cleaning object (i.e., a cleaning operation) by the dry cleaning device configured as described above.

In FIGS. 2A and 2B, upper and lower views show the dry cleaning device described with reference to FIG. 1 in a manner similar to FIG. 1. FIG. 2B shows a state where the suction unit performs a suctioning operation with the opening 10E opened, and FIG. 2A shows a state where the opening 10E is closed by the front surface of the cleaning object CO.

Prior to the cleaning operation, the cleaning medium PC is held inside the upper housing 10A of the dry cleaning housing 10. To this end, an appropriate amount of the flaky cleaning pieces PC may be taken into the upper housing 10A via the opening 10E formed in the upper housing 10A according to a proper method.

For example, as shown in FIG. 2B, the suction equipment 20A is driven to suction air inside the housing from the side of the lower housing 10B via the suction duct 20B, thereby causing pressure inside the upper housing 10A to be negative. Accordingly, with airflow AF (upper view of FIG. 2B) generated by the negative pressure, it is possible to suction a desired amount of the cleaning pieces PC into the upper housing 10A via the opening 10E and take the "cleaning medium" into the upper housing 10A.

As shown in the lower view of FIG. 2B, the cleaning medium thus taken is suctioned onto the separation plate 10C serving as a porous unit and held inside the upper housing 10A.

Since the air inside the upper housing 10A is suctioned by the suction unit and the pressure inside of the upper housing 10A becomes negative, air outside the housing is introduced into the upper housing 10A via the inlet 10F. However, the air flowing inside the inlet 10F at this time is small in flow speed and flow amount. Therefore, the rotating airflow RF generated inside the housing does not have a "power enough to cause the cleaning medium to be scattered."

The flaky cleaning pieces PC suctioned into the upper housing 10A are attached to the separation plate 10C as described above and close the holes of the separation plate 10C. Therefore, as the amount of the suctioned cleaning pieces PC increases, the "total area of the holes allowing the air to pass through" of the separation plate 10C is gradually decreased and thus a suctioning force is reduced.

Accordingly, when a certain amount of the cleaning pieces PC is suctioned into the upper housing 10A, the suctioning operation of the cleaning pieces PC is substantially stopped.

Thus, the cleaning pieces PC are suctioned into the upper housing 10A in accordance with the suctioning performance of the suction unit and held there as the "cleaning medium."

When the cleaning medium is held inside the upper housing 10A as described above, the front surface (front surface which should be cleaned and to which a "stain" is attached) of the cleaning object CO is brought into close contact with the opening 10E of the upper housing 10A as shown in FIG. 2A.

When the opening 10E is closed by the front surface of the cleaning object CO, the suctioning operation via the opening 10E is stopped. Therefore, the negative pressure inside the upper housing 10A is rapidly increased, the flow amount and the flow speed of the air suctioned into the upper housing 10A via the inlet 10F are increased, and the air is straightened inside the inlet 10F and blown into the upper housing 10A via the exit of the inlet 10F as strong airflow.

The blown airflow causes the cleaning pieces PC held on the separation plate 10C to be scattered toward the "front surface of the cleaning object CO closing the opening 10E."

The airflow flows circularly along the inner wall of the upper housing 10A as the rotating airflow RF, and some of it is suctioned by the suction unit via the holes of the separation plate 10C.

When the rotating airflow RF flowing circularly inside the upper housing 10A as described above is returned to the exit of the inlet 10F, the "airflow introduced into the upper housing 10A via the inlet 10F and blown from the exit of the inlet" is merged with the rotating airflow RF and accelerated. Thus, the "stable rotating airflow RF" is generated inside the upper housing 10A.

The cleaning pieces PC serving as the cleaning medium are rotated inside the upper housing 10A by the rotating airflow and repeatedly brought into collision-contact with the front surface (stain) of the cleaning object CO. Due to an impact by the collision between the cleaning pieces PC and the front surface of the cleaning object CO, the stain is separated from the front surface of the cleaning object CO as "minute particles or powder."

The separated stain is discharged by the suction unit to the outside of the dry cleaning housing 10 via the holes of the separation plate 10C.

The rotating airflow RF generated inside the upper housing 10A has its rotary axis orthogonal to the front surface (surface on the side of the upper housing 10A) of the separation plate 10C, and the rotating airflow RF flows in a direction parallel to the front surface of the separation plate 10C.

Thus, the rotating airflow RF is laterally blown to the cleaning pieces PC "suctioned onto the front surface of the separation plate" and penetrated between the cleaning pieces PC and the separation plate 10C, which brings about the effect that the cleaning pieces PC suctioned onto the separation plate 10C are separated from the separation plate 10C and scattered again.

Further, when the opening 10E is closed, the negative pressure inside the upper housing 10A is increased and gets close to the negative pressure inside the lower housing 10B, which brings about the effect that the "force of suctioning" the cleaning pieces PC onto the front surface of the separation plate 10C is reduced and the scattering of the cleaning pieces PC is further facilitated.

The effect is called a "cleaning medium suctioning and scattering effect."

The rotating airflow RF is accelerated in a certain direction. Therefore, high-speed airflow is easily generated and the high-speed movement of the cleaning pieces PC is facilitated. Further, the rotating airflow is circulated inside the upper housing many times until it is suctioned by the porous unit. Therefore, it is found according to an airflow simulation that the flow amount of the rotating airflow reaches five through six times as great as the flow amount of the air flowed via the ventilation path. Since the flow amount is large, it is possible to cause a larger amount of the cleaning medium to be scattered. The cleaning pieces PC rotating and moving at high speed are not easily suctioned onto the separation plate 10C, and the stain attached to the cleaning pieces PC are easily separated from the cleaning pieces PC by a centrifugal force.

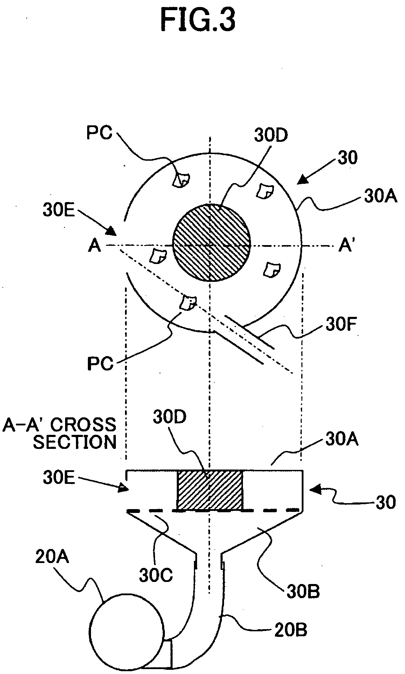

FIG. 3 shows another embodiment of the dry cleaning device in a manner similar to the embodiment shown in FIG. 1, and parts which may not cause confusion are denoted by the same reference symbols as those of FIG. 1 in order to avoid complicated descriptions.

In the embodiment shown in FIG. 3, a dry cleaning housing 30 has integrally-formed upper housing 30A and lower housing 30B, a separation plate 30C serving as a porous unit, and an inlet 30F.

In this embodiment, the lower housing 30B of the dry cleaning housing 30 has a "conical funnel shape" similar to the lower housing 10B of the dry cleaning housing 10 shown in FIG. 1, and the lower part of the lower housing 30B is cylindrically opened to form a "suction port" and connected to the suction equipment 20A via the suction duct 20B. The suction equipment 20A and the suction duct 20B constitute the "suction unit."

The upper housing 30A has a cylindrical shape, and an opening 30E is formed in the peripheral surface of the cylindrical shape. Inside the upper housing 30A, a cylindrical inner cylinder member 30D is provided as part of the housing 30 with the cylindrical axis of the upper housing 30A be a "common axis," and the "lower part" of the inner cylinder member 30D is brought into contact with the separation plate 30C.

The separation plate 30C is similar to the separation plate 10C of the embodiment shown in FIG. 1.

The upper housing 30A is penetrated by the inlet 30F serving as a ventilation path, and the inlet 30F is integrated with the upper housing 30A.

The inlet 30F is similar to the inlet 10F of the embodiment shown in FIG. 1, parallel to the separation plate 30C, has its longitudinal direction inclined with respect to the radius direction of the upper housing 30A, has a direction substantially parallel to the tangent line of the peripheral surface of the inner cylinder member 30D, and has its exit opened in the upper housing 30A so as to face the opening 30E.

In the embodiment shown in FIG. 3, the inlet is single. However, it is also possible to arrange two or more inlets depending on the shape and the size of the housing.

In a manner similar to the embodiment shown in FIG. 1, the suction equipment 20A is driven to suction the cleaning pieces PC into the upper housing 30A. Accordingly, when the opening 30E is closed by the front surface of a cleaning object (not shown) after the cleaning medium is held inside the upper housing 30A, rotating airflow is generated inside the upper housing 30A by outside air taken via the inlet 30F and the cleaning pieces PC of the cleaning medium are scattered in a manner similar to the embodiment shown in FIG. 1. Thus, the cleaning operation is performed in a manner similar to the above.

The embodiment shown in FIG. 1 and the embodiment shown in FIG. 3 are different in the shapes of the upper housings each constituting the dry cleaning housing of the dry cleaning device.

The upper housing 10A of the embodiment shown in FIG. 1 has the conical shape, whereas the upper housing 30A of the embodiment shown in FIG. 3 has the cylindrical shape. In either case, a "stable rotating airflow" can be generated inside the upper housing.

In the case of the upper housing 10A having the "conical shape" of the embodiment shown in FIG. 1, the rotating airflow is generated in parallel to the separation plate 10C. At this time, "stagnation of air" occurs at part close to the top of conical internal space, which in turn plays a role as a cushion and stabilizes the rotating airflow at part close to the front surface of the separation plate 10A.

Further, in the embodiments shown in FIGS. 1 and 3, the inner cylinder members 10D and 30D are provided in the upper housings. The inner cylinder members have the function of reducing a "cross-sectional area as airflow" of the rotating airflow in the upper housing and increase the flow speed of the rotating airflow when the cross sectional area is reduced.

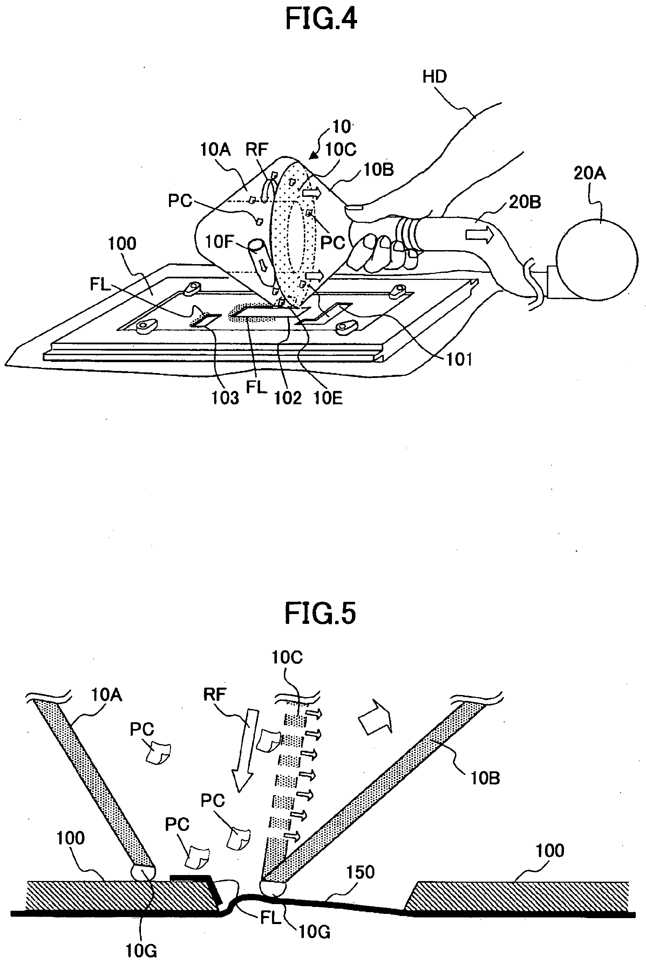

FIG. 4 shows an example of the cleaning operation by the dry cleaning device of which the embodiment is shown in FIG. 1.

The cleaning object is a "dip pallet used in a "flow soldering bath process" described above and denoted by reference symbol 100.

The dip pallet 100 has mask openings 101, 102, and 103, and fluxes FL are deposited and solidified around the peripheries of the holes of the mask openings. The deposited and solidified fluxes FL are "stains" that should be eliminated.

As shown in FIG. 4, an operator holds a joint between the lower housing 10B of the dry cleaning housing and the suction duct 20B with his/her hand HD and presses the opening 10E of the upper housing 10A against "regions to be cleaned" in a suctioning state.

Before the opening 10E is pressed against the regions to be cleaned, the upper housing 10A is suctioned and the cleaning pieces PC of the cleaning medium are suctioned onto the separation plate 10C. Therefore, although the opening 10E is directed downward as shown in FIG. 4, the cleaning pieces PC inside the upper housing 10A never leak to the outside. It is needless to say that, after the opening 10E is pressed against the regions to be cleaned, the housing is put into an air-tight state and thus the cleaning medium never leaks.

When the opening 10E is pressed against the regions to be cleaned, the airflow introduced via the inlet 10F rapidly is increased. Then, the strong rotating airflow RF is generated inside the upper housing 10A, the cleaning pieces PC suctioned onto the separation plate 10C are scattered and brought into collision-contact with the fluxes FL attached to and solidified at the regions to be cleaned of the dip pallet 100. Thus, the fluxes FL are eliminated.

The operator holds the housing 10 with his/her hand HD as described above and successively moves it with respect to the dip pallet 100 to eliminate the attached and solidified fluxes FL completely.

In a state shown in FIG. 4, the periphery of the mask opening 101 of the dip pallet 100 has been cleaned, whereas the periphery of the mask opening 102 is being cleaned.

Even if the "opening is away from the regions to be cleaned" when the operator moves the opening with respect to the regions to be cleaned, the cleaning pieces PC never leak outside the housing due to the "cleaning medium suctioning and scattering effect" described above. Therefore, the amount of the cleaning pieces PC constituting the cleaning medium is maintained, so that the degradation in the cleaning performance due to a decrease in the amount of the cleaning medium never occurs.

It is preferred to enhance the "adhesion of the opening 10E to the regions to be cleaned," but it is not possible to completely close the mask openings and the peripheral ends of the dip pallet 100 in the case shown in FIG. 4.

In such a case, a sheet 150 made of a "flexible and tough" material such as vinyl chloride and rubber is disposed at the rear surface of the dip pallet 100 as shown in FIG. 5, and the housing is arranged at the peripheries of the mask openings of the dip pallet 100 to close the "mask openings of the dip pallet 100." Thus, the "efficiency of cleaning the fluxes FL" can be further enhanced.

Consequently, at the time of cleaning "ends adjacent to the mask openings" of the regions to be cleaned, the flexible sheet 150 is deformed by the suctioning operation of the housing and the opening 10E of the housing is closed. Therefore, air-tightness inside the housing is enhanced, and the cleaning pieces PC of the cleaning medium are effectively accelerated. Consequently, the regions to be cleaned can be satisfactorily cleaned.

If a seal member 10G such as rubber is provided at the periphery of the opening 10E, the air-tightness inside the housing can be further enhanced.

The cleaning medium is gradually broken by an "impact caused when the cleaning medium is brought into collision-contact with the regions to be cleaned" during repetitive use, and is suctioned and collected by the suction equipment 20A of the suction unit together with the fluxes (stains) eliminated from the regions to be cleaned on the dip pallet 100. Therefore, if the dry cleaning device is used for a long period of time, the amount of the cleaning medium held inside the housing is decreased.

In such a case, the operator brings the opening 10E close to a new group of cleaning pieces for suctioning and replenishes it in the housing. At this time, an amount of the cleaning pieces that may be suctioned onto the separation plate 10C are only suctioned. Therefore, an appropriate amount of the cleaning pieces is suctioned, and the replenishment of the cleaning medium is easily performed.

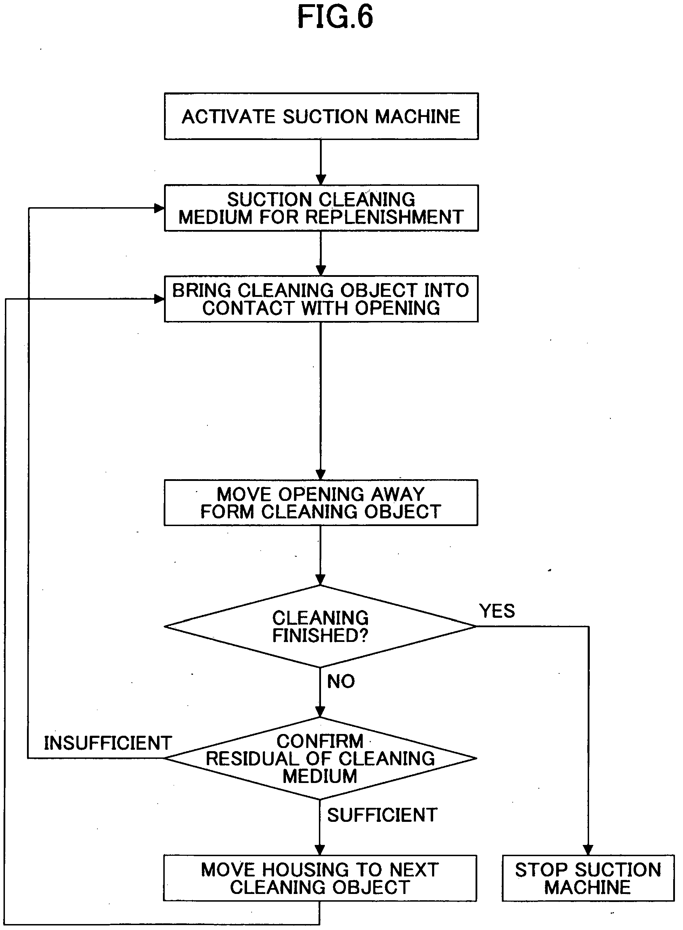

FIG. 6 is a flowchart showing the procedure of the cleaning operation described above.

In the flowchart, the step "activate a suction machine" represents the activation of the suction equipment 20A, and the step "suction cleaning medium for replenishment" represents that the cleaning pieces PC constituting the cleaning medium are suctioned and replenished into the upper housing 10A. Further, the "cleaning object" represents the cleaning object.

The step "moving the opening away from the cleaning object" is performed when the regions to be cleaned are changed or when the cleaning operation is finished, and the suction machine is stopped "at cleaning finished," i.e., when the cleaning operation is finished.

When the "cleaning is not finished," the "residual of the cleaning medium" is confirmed. If the residual is "insufficient," the step "suction the cleaning medium for replenishment" is performed. On the other hand, if the residual is sufficient, (the opening of) the housing is moved to the "next cleaning object," i.e., the regions to be cleaned.

In the embodiment described above, during a period in which the rotating airflow is generated, only the "air introduced via the inlet" is flowed in and the flow amount is reduced compared with a state where the opening is opened. Therefore, in the case of a long-time and successive operation, the suction equipment 20A is put into an overload state, which in turn may bring about "seizure" or the like in the suction equipment 20A.

In order to prevent this problem, it is preferred to provide a "safety valve for releasing the lower housing and the duct into the air" when the reduced state of the negative pressure inside the housing is kept for a certain time or longer.

Further, if the cleaning medium is of a "type that is likely to clog the separation plate," it is effective to form fine convex portions at the front surface of the separation plate to form gaps between the cleaning pieces and the separation plate so as to facilitate the blowing of the rotating airflow into the gaps. Thus, the scattering of the cleaning pieces PC is made easier.

As described above, the dry cleaning device according to the embodiment of the present invention employs the "phenomenon in which the cleaning pieces constituting the cleaning medium are suctioned onto the separation plate by differential pressure between both sides of the separation plate when the opening of the housing is opened and the cleaning pieces are scattered by the rotating airflow when the opening is closed."

The effect of bringing about this phenomenon is called the "cleaning medium suctioning and scattering effect" as described above, and this effect is particularly remarkable when "the flow amount of the inlet is small with the opening opened and the flow amount of the inlet is large with the opening closed."

When the suction flow amount by the suction equipment 20A is changed and the flow amount of the inlet (amount of the air flowing through the ventilation path inside the inlet) is measured both at the time when the opening is opened and at the time when the opening is closed, it was found by an experiment that the "flow amount of the inlet when the opening is opened is proportional to the flow amount of the inlet when the opening is closed."

Accordingly, the smaller the "flow amount of the inlet when the opening is opened/the flow amount of the inlet when the opening is closed" as a parameter is, i.e., the smaller the flow amount of the inlet when the opening is opened relative to the flow amount of the inlet when the opening is closed, the easier the high cleaning medium suctioning and scattering effect can be achieved.

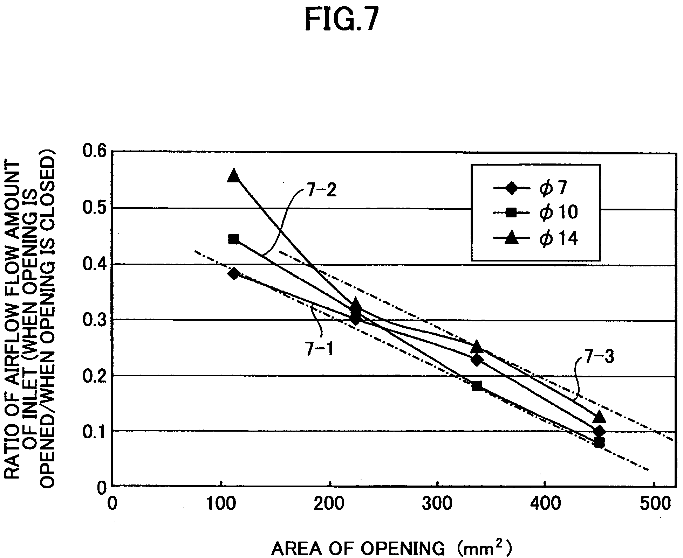

FIG. 7 shows three examples of the results obtained when the area of the opening (shown in a horizontal axis and expressed in the unit mm²) and the cross sectional area of the inlet ({(inner diameter of the inlet/2)²}) are changed to calculate the parameter "the flow amount of the inlet when the opening is opened/the flow amount of the inlet when the opening is closed (indicated as the "ratio of flow amount of inlet (when the opening is opened/when the opening is closed)" shown in a vertical axis in FIG. 7)."

Broken lines 7-1, 7-2, and 7-3 in FIG. 7, respectively, show the calculated results when the inner diameters of the inlet are 7 mm (ϕ7), 10 mm (ϕ10), and 14 mm (ϕ14).

It can be easily recognized that the "the flow amount of the inlet when the opening is opened/the flow amount of the inlet when the opening is closed" described above corresponds to "the flow amount of the air when the opening is opened/the flow amount of the air when the opening is closed" described in claim 6.

It was confirmed by the experiment that the sufficient "cleaning medium suctioning and scattering effect" is obtained when the area of the opening is greater than or equal to 350 mm² and the "flow amount of the inlet when the opening is opened/the flow amount of the inlet when the opening is closed" is at least less than or equal to 0.25 and more preferably less than or equal to 0.1.

By the extrapolation of the graph shown in FIG. 7, it is found that when the area of the opening is greater than or equal to 600 mm², "the flow amount of the air flowing through the inlet becomes substantially zero" when the opening is opened and the leakage of the cleaning medium from the opening never occurs.

Note, however, that this example is on the premise of using the suction equipment having a maximum suction flow amount of 2000 L/min and a maximum differential pressure of about 20 Kpa. The numerical values of the graph fluctuate according to the performance of the suction equipment and the design of the dry cleaning unit.

It is found from the results of FIG. 7 that the ratio of the flow amount of the inlet when the opening is opened to the flow amount of the inlet when the opening is closed greatly depends on the area of the opening of the housing but does not greatly depend on the cross sectional area of the inlet.

This is because "the internal pressure of the housing when the opening is opened is determined regardless of the cross sectional area of the ventilation path of the inlet" with an increase in the opening of the housing.

With the increase in the opening, the internal pressure of the housing rapidly approaches the atmospheric pressure where the opening is opened. Then, as the internal pressure approaches the atmospheric pressure, a pressure difference between the entrance and exit of the inlet is decreased, the amount of the air flowing into the inlet is decreased, and the force of the accelerating and scattering the cleaning medium is reduced. Consequently, the "leakage of the cleaning medium from the opening seldom occurs."

In other words, the "cleaning medium suctioning and scattering effect" is effectively achieved on the premise that the opening has an area such that the internal pressure of the housing at the exit (inside of the housing) of the inlet "becomes equal to the atmospheric pressure or gets close to the atmospheric pressure" when the opening is opened, and that a positional relationship between the opening and the exit of the inlet is established.

In the embodiment described with reference to FIG. 1, it was confirmed that the "cleaning medium suctioning and scattering effect" is observed on the condition that the area of the opening is greater than or equal to 350 mm², and that the pressure difference between the entrance and exit of the inlet is less than or equal to 2 Kpa.

If the dry cleaning device is designed so as to satisfy such a relationship, the "cleaning medium suctioning and scattering effect is easily achieved." Even the dry cleaning device, which is more simple in shape without having the "inner cylinder member 10D" according to the embodiment shown in FIG. 1, can achieve a similar cleaning medium suctioning and scattering effect and be used as cleaning equipment.

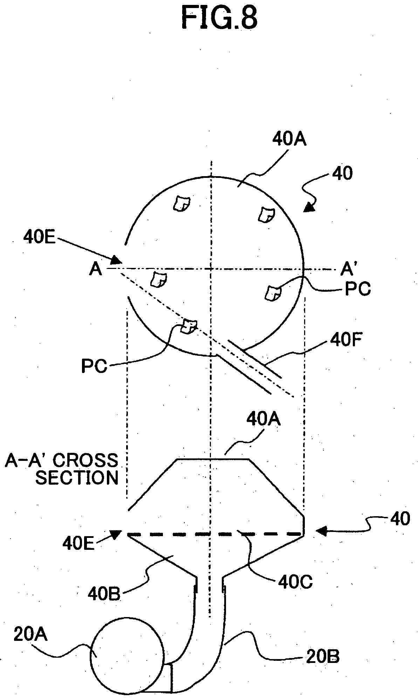

FIG. 8 exemplifies such a case.

The dry cleaning housing denoted by reference symbol 40 has a configuration similar to that of the dry cleaning housing shown in FIG. 1 except that it does not have the inner cylinder member.

Reference symbol 40A denotes the upper housing, reference symbol 40B denotes the lower housing, and reference symbol 40C denotes the separation plate. Reference symbol 40F denotes the inlet constituting the ventilation path. Reference symbol 20A denotes the suction equipment, and reference symbol 20B denotes the duct. Further, reference symbol 40E denotes the opening, and reference symbol PC denotes the cleaning piece.

The cleaning operation of the dry cleaning housing is similar to that of the embodiment of the dry cleaning housing with reference to FIG. 1.

The above description refers to the cases of the dry cleaning housings, respectively, having the conical shape and the cylindrical shape as rotating body shapes. However, the shape of the dry cleaning housing is not limited to them. For example, even with an elliptical column shape or a polygonal column shape, the rotating airflow can be generated according to the direction of the ventilation path of the inlet. Thus, the dry cleaning housings having such shapes can also be implemented.

It is preferable that the flow path of the rotating airflow be smooth, not stagnate, and have small fluctuations in the cross sectional shape and the cross sectional area of the flow path from the viewpoint of "small energy loss."

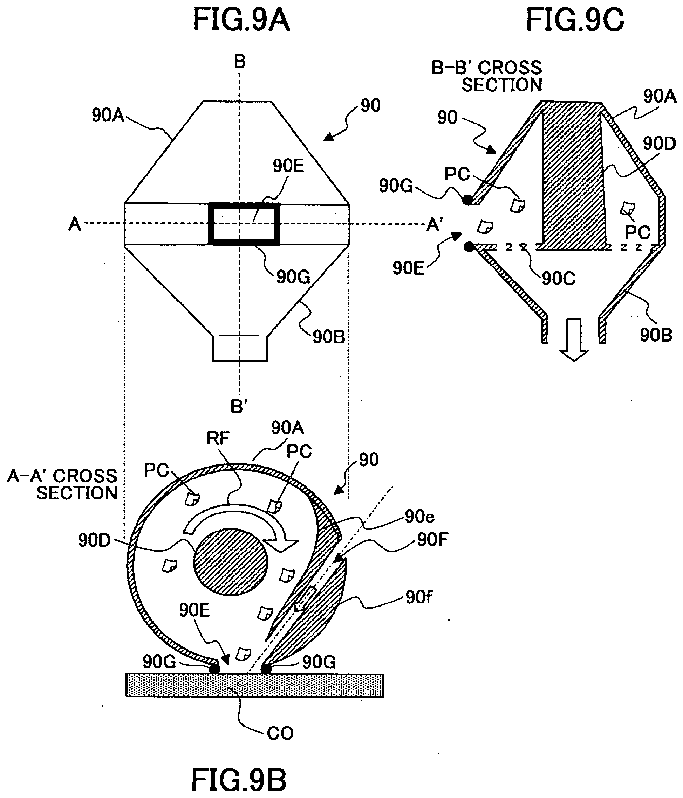

FIGS. 9A through 9C show another embodiment of the dry cleaning housing.

FIG. 9A shows a state where the dry cleaning housing is viewed from its opening, FIG. 9C shows the cross section of the dry cleaning housing taken along line B-B' in FIG.9A, and FIG. 9B shows the cross section of the dry cleaning housing taken along line A-A' in FIG. 9A.

The housing 90 is composed of an upper housing 90A and a lower housing 90B, each having a conical trapezoid shape.

In this example, a ventilation path 90F is formed to be part of the upper housing 90A as the inner structure of the upper housing 90A. In other words, as shown in the cross section of FIG. 9B, the upper housing 90A has inner structures 90e and 90f inside it, and the ventilation path 90F is formed by the inner structures 90e and 90f. Reference symbol 90D denotes a cylindrical inner cylinder member.

The shape of the cross section of the ventilation path 90F is not particularly limited, but is a "rectangular shape" in this example. The exit of the ventilation path 90F is set to be closer to the opening 90E compared with the case of the inlet 10F shown in FIG. 1.

The opening 90E has a "substantially large opening area of equal to or greater than 600 mm²," and causes inner pressure at the exit of the ventilation path 90F to be rapidly reduced to the atmospheric pressure when the opening 90E is opened.

In this embodiment, the inner structures 90e and 90f constituting the ventilation path 90F have a "smooth surface shape" as shown in FIG. 9B. Therefore, a part forming the ventilation path 90F does not hinder the flows of the rotating airflow RF and the scattering cleaning medium.

This results in effective reduction of the accumulation of the cleaning medium, and facilitates the high-speed rotation of the cleaning medium. Consequently, high cleaning performance can be obtained.

Further, it is possible to arrange the exit of the introduced airflow near the opening 90E without disturbing the circulation of the rotating airflow RF.

As described above, with the arrangement of the "exit of the airflow" introduced via the ventilation path 90F near the opening 90E, static pressure near the exit of the airflow becomes close to the atmospheric pressure when the opening is opened, and the airflow flowed via the ventilation path 90F is greatly reduced. This brings about the effect that the cleaning medium "hardly leaks" when the opening is opened.

In FIGS. 9A through 9C, reference symbol 90G denotes a seal member such as rubber provided around the opening 90E.

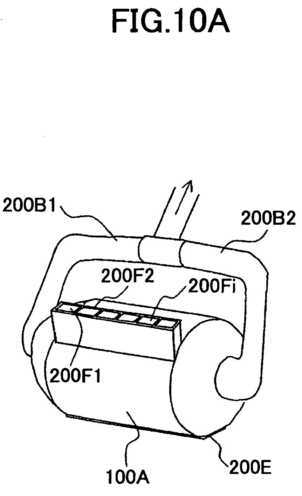

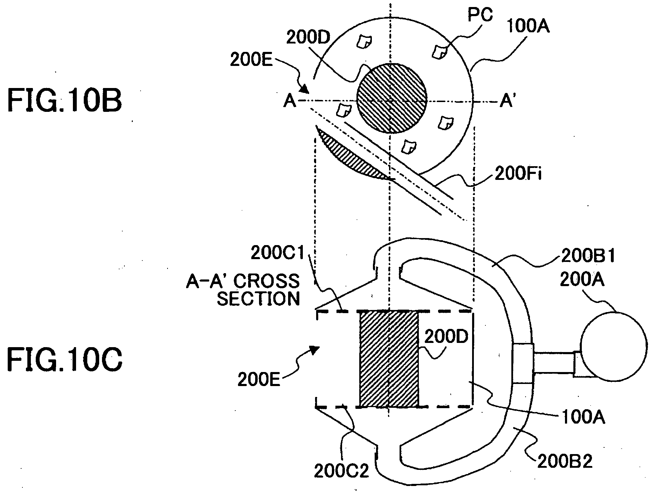

FIG. 10 shows another embodiment of the dry cleaning device.

FIG. 10A is an "external perspective view."

The dry cleaning housing denoted by reference symbol 100A has a "cylindrical shape."

FIG. 10B shows the state of a "cross section at a surface orthogonal to the cylinder axis " of the cleaning housing 100A, and FIG. 10C shows the "cross section of the cleaning housing 100A taken along line A-A' in FIG. 10B."

In this embodiment, both ends in the cylinder axis direction of the cleaning housing 100A have "funnel shapes," the tip ends of the funnel shapes form "suction ports," and both of the tip ends are connected to common suction equipment 200A via ducts 200B1 and 200B2.

The housing has an inner cylinder member 200D inside it and separation plates 200C1 and 200C2 serving as porous units at the both ends in the axis direction.

Further, the housing 100A has plural inlets 200F1, 200F2, ... ,and 200Fi serving as ventilation paths such that they are close to each other in the cylinder axis direction of the cylinder at the cylindrical part of the housing 100A. The ventilation paths including the inlet 200Fi and the like have ventilation-path exits along the generating lines of the cylinder at the side surface of the cylindrical housing.

With the arrangement of the separation plates 200C1 and 200C2 serving as the porous units at both ends of the housing, the suctioning operation by the suction equipment is efficiently performed. Moreover, in consideration of the situation in which the cleaning medium is scattered onto both ends of the housing, it is possible to further increase the area of the opening 200E and evenly clean the regions to be cleaned in a larger area.

In the case of the vertically-long opening 200E, the cleaning medium is likely to leak at the position of the opening 200E away from the separation plates 200C1 and 200C2. Therefore, as shown in FIG. 10B, it is more effective to arrange the exits of the ventilation paths of the plural integrated inlets 200F1, 200F2, ... ,and 200Fi near the opening 200E for reliably achieving the cleaning medium suctioning and scattering effect.

In FIGS. 10A through 10C, the suction ducts are, respectively, connected to the suction ports at the funnel-shaped tip ends forming both ends in the cylinder axis direction of the cleaning housing 100A. However, if the cleaning housing 100A is formed such that the cylinder member 200D is hollow, the funnel-shaped tip ends are communicated with each other, and one of the suction ports of the funnel-shaped tip ends is closed, the housing can be suctioned by the single suction duct from both ends of the housing via the separation plates 200C1 and 200C2. Accordingly, similar effects can be achieved.

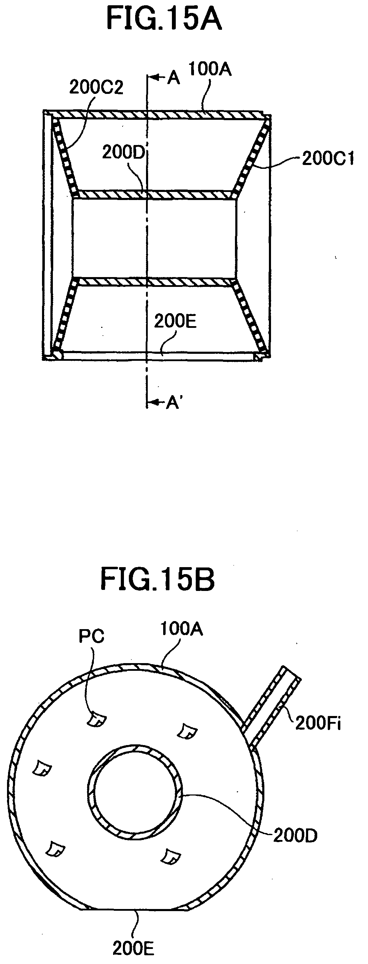

Moreover, as shown in FIG. 15A, the cleaning housing may be formed such that the porous units are cylindrically drawn into the housing to eliminate the funnel-shaped protrusions. Consequently, the interference by the funnel-shaped protrusions is prevented.

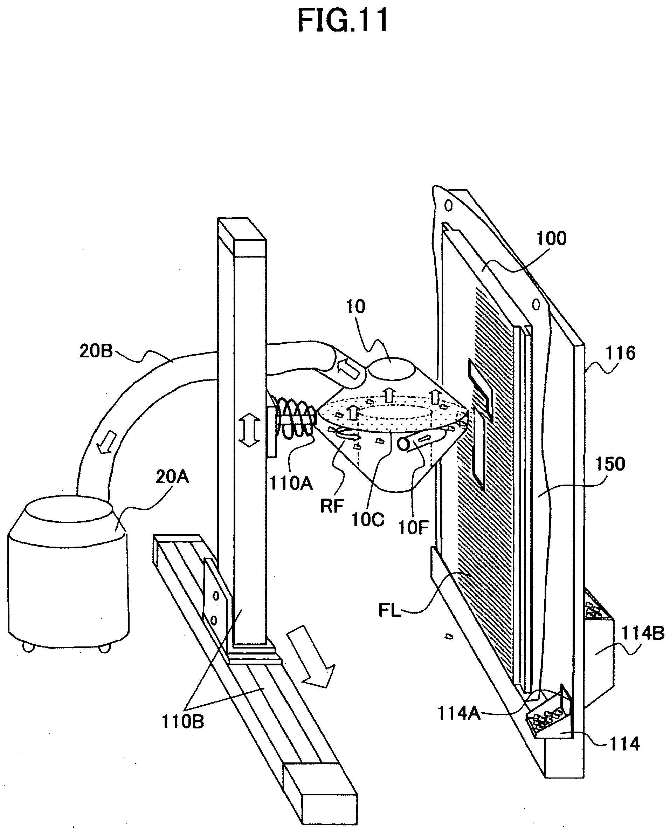

FIG. 11 shows still another embodiment of the dry cleaning device.

The embodiment described above with reference to FIG. 4 refers to the "case in which the operator performs the cleaning operation while holding the cleaning housing with his/her hand." However, according to the embodiment shown in FIG. 11, the dry cleaning housing is held by a linear motor or a robot and moved along a previously-programmed track, whereby a "full automatic dry cleaning operation" can be performed.

Since the dry cleaning housing 10, the suction equipment 20A, and the suction duct 20B are similar to those of the embodiment shown in FIG. 1, they are denoted by the same symbols as those shown in FIG. 1.

The dry cleaning housing 10 is fixed to an X-Y orthogonal robot 110B by a spring member 110A and can be moved so as to follow the irregularities of a dip pallet 100. Note that the dry cleaning housing 10 may further have a movable shaft in a pressing direction.

The spring member 110A, the X-Y orthogonal robot 110B, and a controlling unit (not shown) for controlling the X-Y orthogonal robot 110B serve as parts of a "position and posture controlling unit."

The dry cleaning housing 10 has a roller unit (not shown) around its opening such that it can be easily moved on the front surface of the pallet in contact state. The roller unit also serves as part of the position and posture controlling unit.

A cleaning medium supplying unit 114 is arranged within the movement range of the dry cleaning housing 10.

The dip pallet 100 as a cleaning object is fixed to a supporting plate 116 in a "vertically standing state" as shown in FIG. 11, and a sheet 150 made of rubber for preventing the leakage of the cleaning medium is arranged on the rear side of the pallet 100 so as to be suspended from the supporting plate 116.

With the arrangement of the dip pallet 100 in the standing state, cleaning space can be eliminated. However, even if the dip pallet 100 is horizontally arranged, the functionality of the dip pallet 100 is not degraded.

The X-Y orthogonal robot 110B and the suction equipment 20A are controlled by the controlling unit (a computer or a CPU unit) (not shown).

Upon receiving instructions for starting the cleaning operation, the controlling unit operates the suction equipment 20A, and drives and controls the X-Y orthogonal robot 110B at the same time for moving the dry cleaning housing 10 to regions to be cleaned.

The dry cleaning housing 10, of which the opening 10E is pressed against the front surface of the dip pallet 100 as a cleaning object by the spring member 110A, cleans the front surface of the dip pallet 100 to eliminate the fluxes FL in the manner as described above.

In such a state, the X-Y orthogonal robot 110B is driven and controlled to scan the regions to be cleaned. Thus, "all the regions to be cleaned" on the dip pallet 100 are cleaned.

At the ends of the mask openings and the mask openings of the dip pallet 100, air-tightness at the opening 10E of the dry cleaning housing 10 is maintained by the sheet 150 arranged on the rear side of the dip pallet 100. Consequently, the dry cleaning device can perform the cleaning operation satisfactorily.

According to a control program with respect to the X-Y orthogonal robot 110B, the dry cleaning housing 10 can be moved while detouring parts where the cleaning operation is not necessary such as the openings of the dip pallet 100. Consequently, time required for performing the cleaning operation can be reduced, and the consumption of the cleaning medium can be reduced.

Note that as a control program for a cleaning process, a "program for periodically moving the dry cleaning housing 10 to the cleaning medium supplying unit 114 and appropriately replenishing the cleaning medium" may be provided.

When the opening of the dry cleaning housing 10 becomes close to the cleaning medium supplying unit 114 by the suctioning force of the suction equipment 20A, the cleaning medium PC can be suctioned into the dry cleaning housing 10 for replenishment.

The cleaning medium supplying unit 114 retains the cleaning medium PC in an appropriate amount and replenishes it according to a replenishing amount. The replenishment of the cleaning medium PC does not particularly require a complicated structure, and it is only required for the cleaning medium supplying unit 114 to drop the "cleaning medium PC in a quantitative amount" from a stocker 114B where the cleaning medium PC is accumulated.

As a result of the constant replenishment of the cleaning medium PC, reliable cleaning performance can be maintained for a long period of time.

In this embodiment, the cleaning operation is performed on the planar dip pallet 100 serving as the cleaning object. However, if a "vertical articulated robot having a freedom degree of, for example, 6 or more" is used as a robot for holding the dry cleaning housing and the position and the posture of the housing is controlled such that the housing is moved along a particular movement track, the dry cleaning device can be realized that performs the full automatic cleaning operation on a cleaning object having a "three-dimensional and complicated shape."

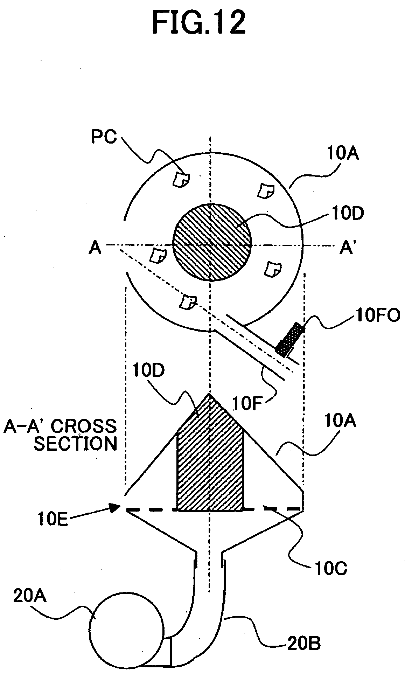

FIG. 12 shows only the characteristics of the embodiment of the dry cleaning device having a mechanism capable of controlling the opening and closing of the ventilation path.

The dry cleaning device is based on the embodiment described with reference to FIG. 1, and parts which may not cause confusion are denoted by the same reference symbols as those of FIG. 1.

In the embodiment shown in FIG. 12, an inlet opening and closing unit 10FO for opening and closing the ventilation path is provided in the inlet 10F constituting the ventilation path.

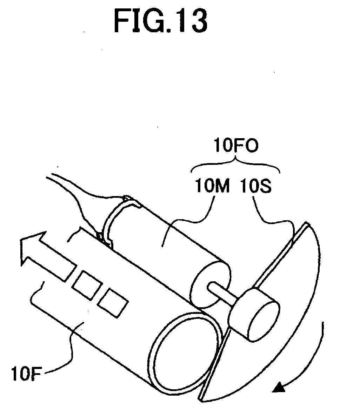

As shown in FIG. 13, the inlet opening and closing unit 10FO is specifically a shielding plate 10S connected to a motor 10M. The opening and closing operations of the motor 10M are controlled by the controlling unit (not shown). When the opening 10E is opened, the motor 10M causes the shielding plate 10S to shield the ventilation path of the inlet 10F to control the ventilation of the airflow.

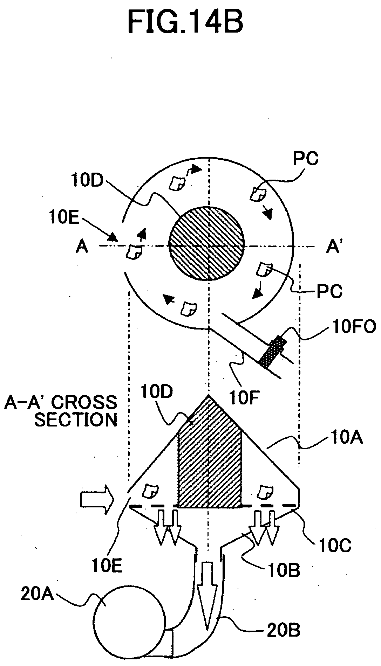

As shown in FIG. 14B, if the ventilation path of the inlet 10F is closed by the inlet opening and closing unit 10FO when the opening 10E is opened, even weak rotating airflow does not occur. Consequently, it is possible to "more reliably suction the cleaning medium PC onto the separation plate 10C and prevent the leakage of the cleaning medium PC."

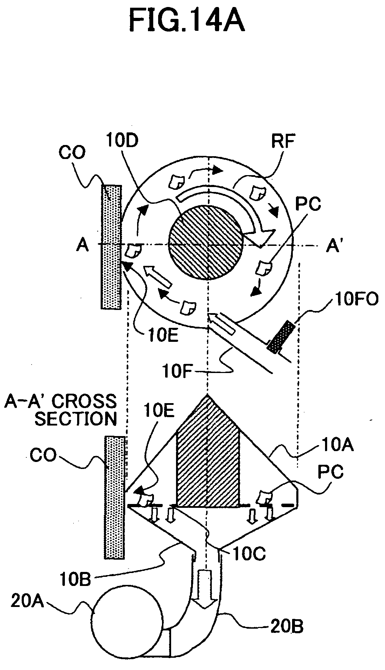

Further, as shown in FIG. 14A, the opening and closing mechanism has another effect. Specifically, when the ventilation path of the inlet 10F is shielded at the cleaning operation, the upper housing 10A is suctioned, a difference in pressure between the upper housing 10A and the lower housing 10B becomes small, and the force of suctioning the cleaning medium PC onto the separation plate 10C is remarkably reduced. Therefore, when the inlet 10F is opened again, the cleaning medium PC is easily scattered.

Accordingly, by periodically opening and closing the inlet 10F during the cleaning operation, it is possible to reduce the accumulation of the cleaning medium PC on the separation plate 10C and maintain high cleaning performance with the enhanced scattering efficiency of the cleaning medium PC.

As described above, the opening and closing of the inlet is based on the motor and the controlling unit. However, the inlet may be passively opened and closed by a structure like a relief valve according to pressure inside the housing, or the opening and closing mechanism may be of an attachment type and configured to be separated from a main body.

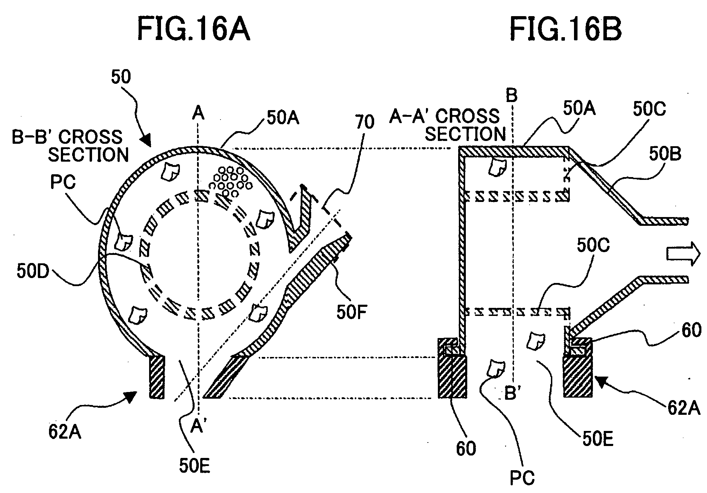

FIG. 16 shows still another embodiment of the cleaning housing. This embodiment is characterized in that the inlet is shaped to have a nonconstant cross sectional area. That is, the entrance of the inlet opened to the atmospheric pressure is enlarged. As the characteristics of fluids, if the air intake entrance of the inlet opened to the air is rough-hewn, vortexes occur near the entrance, which results in a large pressure loss.

If the pressure loss of the inlet is too large, airflow is not satisfactorily suctioned from the inlet in a case where the suction equipment having low suction performance is connected to the cleaning housing. Consequently, the rotating airflow becomes weak and cleaning performance is degraded. In order to prevent this problem, it has been known to use a technology in which the entrance of the inlet that suctions the air is tapered to facilitate the suctioning of the air and reduce the pressure loss of the inlet.

Specifically, as shown in FIG. 16A, the cross sectional area of the inlet 50F is designed to be enlarged toward the periphery of the cleaning housing 50. Such a design enables the effective use of space between the cleaning housing and the inlet, and does not influence the entire size of the cleaning housing.

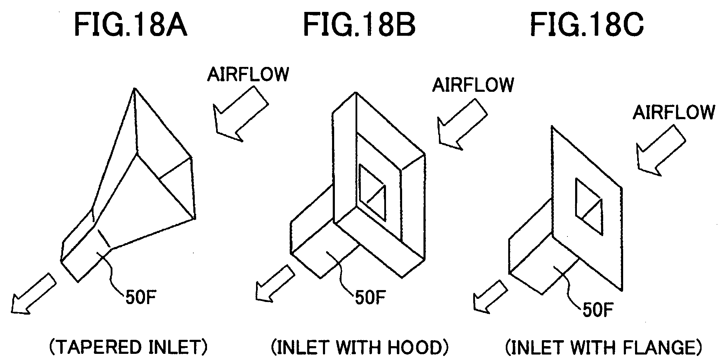

In this embodiment, the entrance of the inlet is tapered as shown in FIGS. 16A and 18A. However, as shown in FIGS. 18B and 18C, if the inlet is provided with a hood or a flange at its entrance, the occurrence of vortexes and the pressure loss of the inlet are reduced.

Further, along with the reduction of the pressure loss of the inlet, it is preferred to further increase the area of the opening 50E. Thus, a large amount of the airflow is flowed from the opening when the opening is opened, whereby pressure inside the cleaning housing becomes close to the atmospheric pressure. On the other hand, the airflow flowed via the inlet is reduced. Therefore, the rotating airflow does not occur in the cleaning housing. At this time, the cleaning medium is not scattered since it is suctioned onto the porous unit. Consequently, a certain amount of the cleaning medium can be held inside the cleaning housing.

In this embodiment, an inner cylinder member 50D arranged at the center of the cleaning housing 50 is formed to be hollow and connected to the suction equipment, and the side surface of the inner cylinder member 50D is constituted of a porous unit 50C. Since the side surface of the inner cylinder member 50D is parallel to the rotating airflow, the cleaning medium can be scattered again by the rotating airflow even if it is suctioned onto the side surface. Accordingly, the cleaning medium suctioning and scattering effect is achieved under such an arrangement of the porous unit.

As described above, if the area of the porous unit 50C is made large, it is possible to reduce the pressure loss by the porous unit 50 and realize a mechanism that has an entirely low pressure loss and does not put a burden on the suction equipment.

Further, in this embodiment, the cleaning housing is configured such that an attachment is attached to the opening of the cleaning housing to enhance local fitting performance and followability with respect to the front surface of a cleaning object.

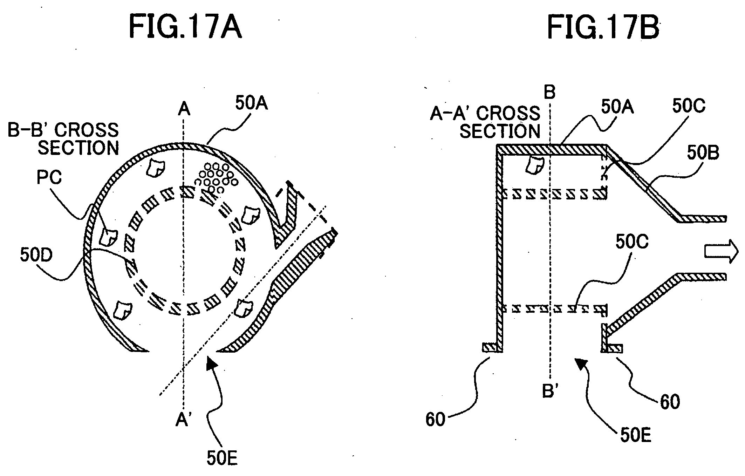

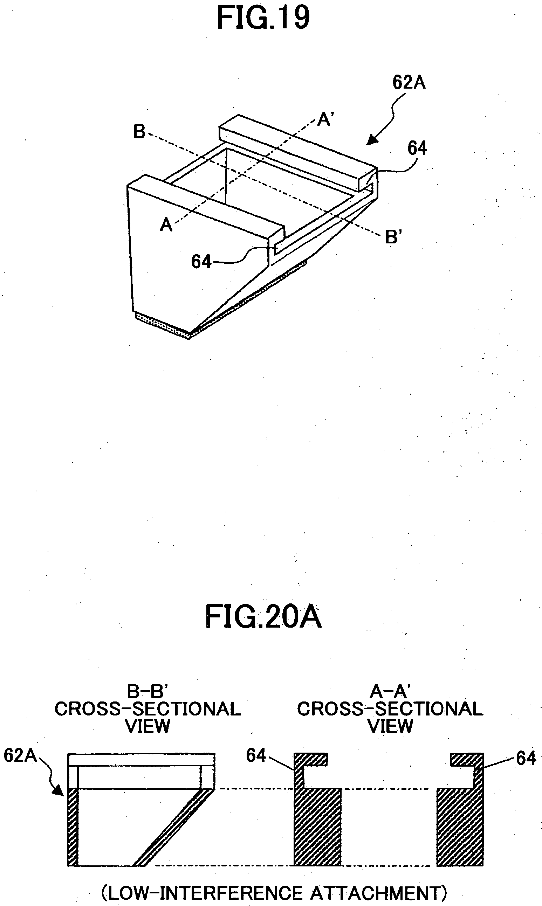

As shown in FIGS. 16B and 17B, edges 60 serving as fitting units, which protrude in a horizontal direction in FIGS. 16B and 17B, are provided in the opening 50E of the cleaning housing. The attachment 62A is attached to the opening in such a manner as to fit in the edges 60. As shown in FIG. 19, the attachment 62A has grooves 64 with a U-shaped cross section which are slid into the edges 60. The fitting structure using concave and convex portions is in a relative relationship. In other words, the cleaning housing may be configured such that the concave portions are formed in the opening.

When the attachment 62A is inserted from a direction parallel to the opening 50E such that the concave portions and the convex portions fit together, the attachment 62A can be fixed in a state where the opening of the housing is aligned with an opening at the bottom surface (upper end in FIG. 19) of the attachment 62A. The portion where the concave and convex portions fit together is more preferably tapered so as to fix the attachment 62A. In this embodiment, connection by fitting the grooves and the edges together is used. However, in order to fix the attachment 62A, joining with a hooking mechanism, an adhesive, a magnet, a Velcro (Trademark), or the like may be used.

FIGS. 20A through 20E schematically show the cross sectional views of various attachments. In FIGS. 20A through 20E, the cross sectional views on the right side are those taken along line A-A' in FIG. 19, and the cross sectional views on the left side are those taken along line B-B' in FIG. 19.

FIGS. 19 and 20A show a "low-interference attachment" that reduces interference (contact area) with other parts on the front surface of a cleaning object.

The low-interference attachment 62A is formed into a tapered hollow trapezoid and has a bottom surface the shape of which corresponds to the opening.

Further, the low-interference attachment 62A is designed such that the tip end of the trapezoid is positioned on the extension of the direction of the inlet when the low-interference attachment 62A is attached to the cleaning housing.

When the tip end of the attachment is brought into contact with the cleaning object and closed, the rotating airflow is generated inside the cleaning housing by the airflow flowed via the inlet and the cleaning medium is scattered. The cleaning medium accelerated by the airflow flowed via the inlet is linearly scattered by its inertia force, brought into collision-contact with the cleaning object via the tip end of the low-interference attachment 62A where the opening area is reduced, and eliminates foreign matter. After the elimination of the foreign matter, the cleaning medium is reflected by the cleaning object and returned to the cleaning housing. Then, the cleaning medium is circulated again. With the installation of the low-interference attachment 62 in the cleaning housing, it is possible to bring the cleaning housing into contact with a narrower region without interfering with the cleaning object.

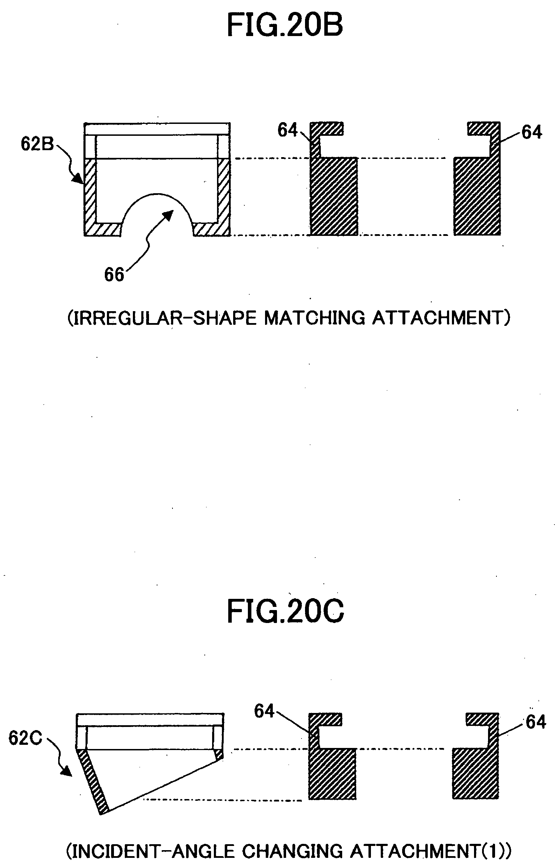

If the cleaning object has a shape other than plane, an irregular-shape matching attachment capable of adhering to the shape may be used. FIG. 20B shows, as an example of the irregular-shape matching attachment, an attachment 62B in which a semi-circular cut 66 is made at the side surface of a square cylinder. With the connection of such an attachment to the opening of the cleaning housing, the cleaning operation can be performed in such a manner that the cleaning housing is brought into close contact with the side surface of the cleaning object having a cylindrical shape, pressure inside the housing is set to be negative to generate the rotating airflow, and the cleaning medium is scattered and brought into contact with (brought into collision-contact with) the side surface of the cleaning object having the cylindrical shape.

The above refers to the example in which the attachment corresponds to the cleaning object having the cylindrical shape. However, if the attachment is designed so as to match the shapes of cleaning objects, it is possible to correspond to the cleaning objects having the various shapes.

Depending on the cleaning objects and objects to be eliminated, cleaning quality may be improved by adjusting the colliding angles of the cleaning pieces.

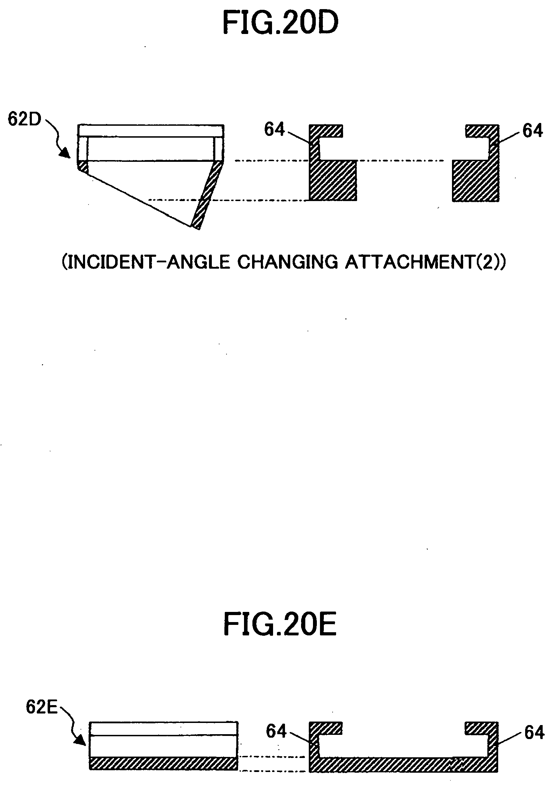

FIGS. 20C and 20D show incident-angle changing attachments (1) and (2) with respect to the cleaning object.

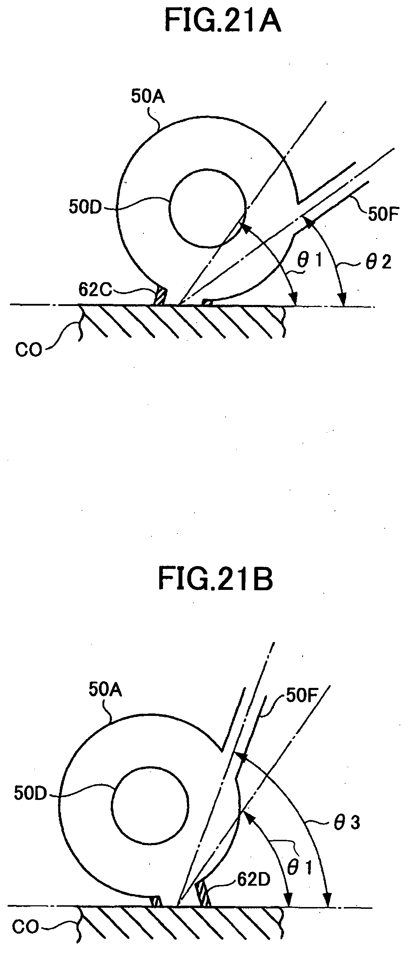

With an incident-angle changing attachment 62C shown in FIG. 20C, the angle θ1 of the airflow via the inlet 50F with respect to the cleaning object CO where the attachment is not set can be changed to the angle θ2 as shown in FIG. 21A. That is, the angle of the airflow via the inlet 50F with respect to the cleaning object can be easily changed without requiring any operations for adjusting the angle of the airflow in a horizontal direction only by pressing the tip end surface of the attachment against the cleaning object.

With an incident-angle changing attachment 62D shown in FIG. 20D, the angle θ1 of the airflow via the inlet 50F with respect to the cleaning object CO where the attachment is not set can be changed to the angle θ3 as shown in FIG. 21B. That is, the angle of the airflow via the inlet 50F with respect to the cleaning object can be easily changed without requiring any operations for adjusting the angle of the airflow in a vertical direction only by pressing the tip end surface of the attachment against the cleaning object.

The cleaning medium is scattered in the direction of the airflow flowed via the inlet. Therefore, when the attachment having a predetermined angle is used to change the angle of the airflow flowed via the inlet with respect to the cleaning object, the colliding angle of the cleaning medium with respect to the cleaning object can be changed.

When the incident-angle changing attachment 62C is used, the cleaning medium is brought into collision-contact with the cleaning object at a shallow angle. Therefore, an impact in a direction orthogonal to the cleaning object is reduced, and the cleaning medium is brought into contact with the cleaning object at its surface rather than at its edge. Consequently, it is possible to eliminate foreign matter without damaging the cleaning object.

On the other hand, when the incident-angle changing attachment 62D is used, the impact in the direction orthogonal to the cleaning object is increased. Consequently, it is possible to eliminate a solid film-like stain. Thus, if the attachments are appropriately used according to the characteristics of the stain and the cleaning object, it is possible to apply the cleaning housing to a board range of the cleaning operation.

In this embodiment, the attachments are used to change the incident angle of the cleaning medium with respect to the cleaning object. However, if the angle of the inlet itself is changed by a movable part provided at a joint between the inlet and the cleaning housing, a similar effect can be obtained.

Depending on the shape of the attachment 62, the rotating airflow may be generated inside the cleaning housing by the airflow suctioned from the opening. Particularly when the rotating airflow rotating in a direction opposite to the rotating airflow at the cleaning operation is generated, the cleaning pieces are scattered toward the exit of the ventilation path of the inlet. Therefore, the cleaning pieces may be reversely flowed through the inlet and leaked outside of the housing.

In order to prevent this problem, if a leakage preventing member (mesh cover) having low air resistance such as an open metal mesh is provided anywhere inside the ventilation path of the inlet, the reverse flow of the cleaning pieces can be prevented. Consequently, the operability of the cleaning housing is enhanced.

In this embodiment, a mesh cover 70 is provided at the entrance of the inlet 50F as shown in FIG. 16A.

If a flexible member is provided at the tip ends of the various attachments brought into contact with the cleaning object, it is possible to bring the various attachments into contact with the cleaning object with no space between them. The adhesion of the attachments to the cleaning object brings about the effect that the cleaning pieces hardly leak. Further, since the negative pressure inside the housing is increased, the faster airflow is flowed from the inlet and the strong rotating airflow is obtained. Consequently, the cleaning performance of the cleaning housing is enhanced.

The attachment 62 itself may be made of a tough and flexible material such as urethane rubber.

FIG. 20E shows a cover attachment 62E used when the cleaning operation is finished or when the cleaning housing is not used. The cover attachment 62E is a plate-like member having no hole. During the operation of the suction equipment, the cleaning medium is suctioned onto the porous unit. Therefore, the cleaning medium never leaks outside the cleaning housing even if the opening of the cleaning housing is directed downward. However, if the suction equipment is stopped, the cleaning medium is free from its suctioned state and thus may fall from the opening.

In order to solve this problem, if the cover attachment 62E is attached to the opening when the suction equipment is stopped, it is possible to prevent the leakage of the cleaning medium. In this embodiment, the cover attachment 62E is provided so as to be separated from the cleaning housing. However, the cover attachment 62E may be integrally provided near the opening of the cleaning housing and configured such that it can be easily moved to the opening for closing. Further, the cleaning housing may have a mechanism that detects the stopped state of the suction equipment and automatically closes the opening. The stopped state of the suction equipment can be easily detected with the measurement of the static pressure inside the lower housing.

### (Example)

The dry cleaning device used for describing the embodiment with reference to FIG. 3 was actually manufactured in the following manner.

The cylindrical upper housing 30A was set to have a cylinder height of 50 mm and a diameter of 150 mm. Further, the inner cylinder member 30D was set to have 80 mm.

The opening 30E was formed into a rectangular shape having a length of 45 mm in the cylinder axis direction of the upper housing 30A and having a length of 60 mm in the cylinder peripheral surface direction thereof. Further, the inlet 30F having a rectangular cross section of 45 mm x 5 mm as an inside dimension was used.

The entirety of the dry cleaning housing 30 was made of a plastic resin, and the lower housing 30 was connected to the duct of a home-use electric vacuum cleaner serving as the "suction equipment."

The material characteristics and the size of the cleaning medium are appropriately selected according to the type of a stain on the cleaning object. Here, a description is given of the cleaning medium suitable for eliminating film-like extraneous matter such as flux.

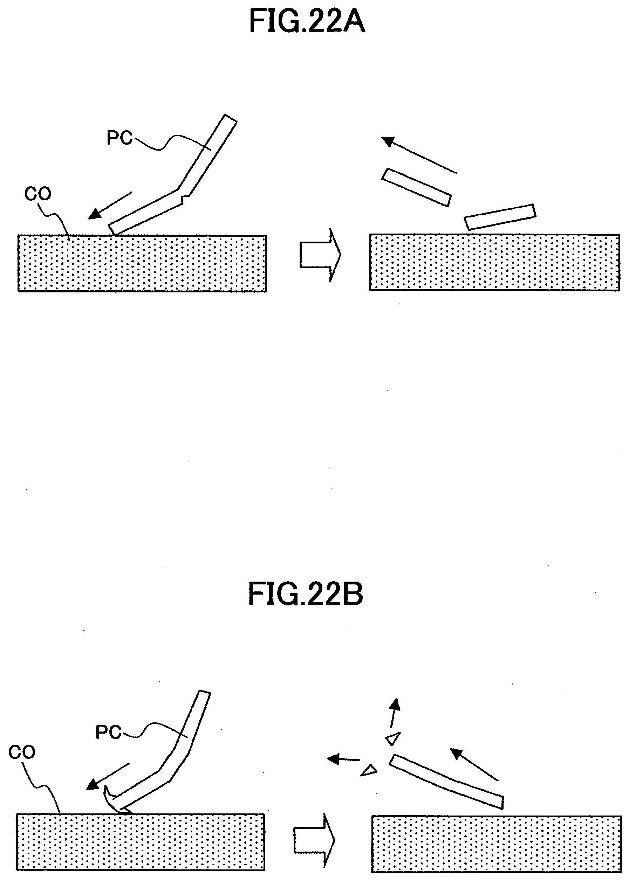

FIGS. 22A through 22D are schematic diagrams each showing a pattern when the flaky cleaning medium PC is brought into collision-contact with the cleaning object CO.

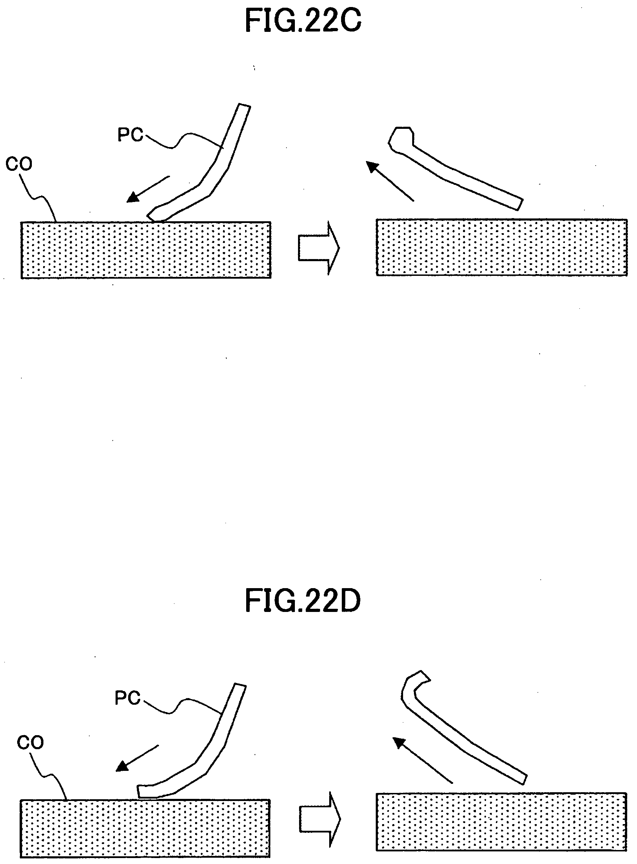

In the case of the cleaning medium where plastic deformation is likely to occur, deformation at the end of the cleaning medium PC becomes large as shown in FIG. 22C, which results in an increase in contact area and a reduction in impact force. Consequently, a contact force at the end of the cleaning medium PC is dispersed when the cleaning medium PC is brought into collision-contact with the cleaning object CO, and thus the cleaning performance of the cleaning housing is degraded. Therefore, the cleaning medium PC is less likely to dig into the film-like extraneous matter, which results in a decrease in cleaning efficiency of the cleaning device.

Also in the case of the cleaning medium PC where ductile breaking occurs, plastic deformation at the end of the fractured surface of the cleaning medium PC becomes large as shown in FIG. 22D, which results in an increase in contact area and a reduction in impact force. Consequently, a contact force at the end of the cleaning medium PC is dispersed when the cleaning medium PC is brought into collision-contact with the cleaning object CO, and thus the cleaning performance of the cleaning housing is degraded. Therefore, the cleaning medium PC is less likely to dig into the film-like extraneous matter, which results in a decrease in cleaning efficiency of the cleaning device.

Conversely, in the case of the cleaning medium where a brittle fracture occurs, plastic deformation at the end of the fractured surface of the cleaning medium PC is small. Therefore, the dispersion of a contact force at the end of the cleaning medium PC hardly occurs.

Further, when the brittle fracture repeatedly occurs even if the film-like extraneous matter is attached to the end of the cleaning medium PC, a new end of the cleaning medium PC can be formed one after another. Therefore, the cleaning efficiency of the cleaning device never decreases.

Examples of brittle materials include glass pieces, ceramic pieces, resin film pieces such as acrylic resins, polystyrene, and polylactic acids.

The cleaning medium PC is broken when a folding force is repeatedly applied to the cleaning medium PC. The present disclosure defines the brittleness of the cleaning medium PC according to its folding resistance.

If the cleaning medium made of a brittle material having a folding resistance of equal to or less than 52 is used, burrs caused when the cleaning medium PC is repeatedly brought into collision-contact with the cleaning object CO do not remain on the cleaning medium PC, but are folded and separated from the cleaning medium PC (see FIG. 22B). Since the burrs do not remain on the cleaning medium PC, the edges of the cleaning medium PC are maintained.

Moreover, if the cleaning medium PC made of the brittle material having a folding resistance of less than 10 is used, the cleaning medium PC is folded at its center before burrs are caused and new edges of the cleaning medium PC are formed (see FIG. 22A).

Thus, the edges of the cleaning medium PC are maintained. Since the edges of the cleaning medium PC are maintained, the digging amount of the cleaning medium PC is not decreased when the cleaning medium PC is brought into collision-contact with the cleaning object CO. Consequently, the fixed film eliminating performance of the cleaning medium PC is not degraded with time.

Here, it is defined that the flaky cleaning medium PC has a thickness of greater than or equal to 0.02 mm and less than or equal to 0.2 mm and has an area of less than or equal to 100 mm².

Pencil hardness was measured according to a method in conformity with JIS K-5600-5-4, representing the lead number of the hardest pencil at which a flaw or a dent was not made in the evaluated flaky cleaning medium PC.

Further, the folding resistance was measured according to a method in conformity with JIS P8115, representing the number of times required until the flaky cleaning medium PC was broken after the operation of folding the flaky cleaning medium was repeatedly folded at 135° with R = 0.38 mm.

Here, an epoxy resin pallet containing glass fibers, to which flux was attached, was used as a sample of the cleaning object. The pallet was used for masking not soldered regions of PCB when a soldering process was performed in a flow soldering bath. If such a mask jig was repeatedly used, the flux would be thickly accumulated in a film-like state. Therefore, it is necessary to eliminate the flux periodically. The pencil hardness of the fixed flux was 2B. Further, the film thickness was in the range of 0.5 mm through 1 mm.

As the cleaning device, the dry cleaning device having the dry cleaning housing shown in FIG. 3 was used. The suction equipment having suction performance (a vacuum degree of 20 Kpa) was used as the cleaning device.

Using the pallet to which flux was fixed, a region having an opening area of 45 mm x 60 mm was cleaned for three seconds as one sample unit. 2 g of respective cleaning media PC were used. The used flaky cleaning media PC and cleaning results are shown in table 1.

Determination marks used in the table are as follows.
A: Stain was hardly eliminated.
B: Cleaning leftover partially existed.
C: Almost cleaned.
D: Remarkably cleaned.
E: Cleaning medium was consumed and completely discharged from cleaning bath.

As the properties of the respective cleaning media PC, the folding resistance and the pencil hardness are shown in table 1.

According to the determination results of initial cleaning performance shown in table 1, it is found that a flux stain is hardly eliminated if the pencil hardness of the cleaning media PC is less than or equal to the pencil hardness 2B of the flux. This is because the cleaning media PC do not dig into the film-like flux stain when the cleaning media PC are brought into collision-contact with the cleaning object CO.

The cleaning media PC are scattered by the airflow and repeatedly brought into collision-contact with the cleaning object CO. Every time the cleaning media PC are brought into collision-contact with the cleaning object CO, damage is accumulated in the cleaning media PC, which results in degradation such as breakage or deformation in the cleaning media PC.

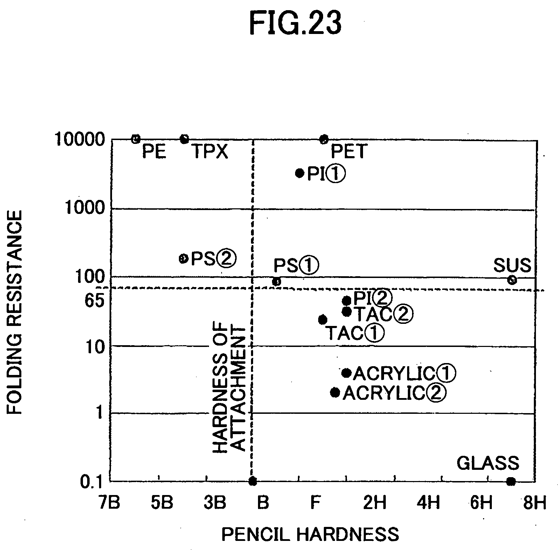

Further, the mechanical properties (folding resistance and pencil hardness) of the respective cleaning media PC are shown in FIG. 23.

With reference to table 1 and FIG. 22, a description is specifically given of the degradation patterns of the cleaning media PC again. In the case of the cleaning media PC made of a material having a folding resistance of less than 10 such as glass, acrylic 1 (indicated as the corresponding number surrounded by a circle in the table, and the same applies to the other numbers below), acrylic 2, and COC (polyolefin), the cleaning media PC are broken in the vicinity of their center due to an impact caused when they are brought into collision-contact with the cleaning object CO as shown in FIG. 22A. At this time, since the broken surfaces of the cleaning media PC are caused to have new edges and dig into the flux, the fixed substance eliminating performance of the cleaning media PC is not degraded.

In the case of the cleaning media PC made of a material having a folding resistance of greater than or equal to 10 and less than or equal to 52 such as TAC 1, TAC 2, and PI 2, the cleaning media PC are not broken in the vicinity of their center but only burrs caused when the cleaning media PC are brought into collision-contact with the cleaning object CO are broken as shown in FIG. 22B. Since the thicknesses of the cleaning media PC are maintained, the cleaning media PC maintain the effect of digging into the flux and eliminating the same.

In the case of the cleaning media PC made of a material having a folding resistance of greater than or equal to 65, the cleaning media are not folded when the cleaning media PC are brought into collision-contact with the cleaning object CO but plastic deformation occurs in the edges of the cleaning media PC.

FIG. 22C shows a state where the edges of the cleaning medium PC are crushed due to its plastic deformation and thus the end of the cleaning medium PC becomes limp. Among the materials in table 1, PI 1 shows such a behavior.

FIG. 22D shows a state where the edges of the cleaning medium PC are curled due to its plastic deformation. Among the materials in table 1, SUS, PS 1, PS 2, PE, PET, and TPX show such a behavior.

The edges of the cleaning media PC exemplified with reference to FIGS. 22C and 22D become limp due to the plastic deformation, and the impact caused when the cleaning media PC are brought into collision-contact with the cleaning object CO is reduced. Consequently, the cleaning performance of the cleaning media PC is greatly degraded after plural samples are processed as shown in table 1.

According to the above results, it is found that excellent results can be obtained for a long period of time if the cleaning media PC, which have a pencil hardness of greater than or equal to that of the flux and are made of a brittle material having a folding resistance of greater than or equal to 0 and less than or equal to 52, are used for eliminating the flux fixed in film state.

As the bases of the numeric values exemplified in this embodiment, the numerical value ranges of the folding resistance of the respective cleaning media PC are shown in tables 1 and 2.

In tables 1 and 2, the flaky cleaning media PC (made of the materials such as glass, COC, and acrylic 2) showing an average folding resistance or a minimum folding resistance of 0 become extremely brittle when a folding force is applied to the flaky cleaning media PC, and the flaky cleaning media PC are consumed in a very short period of time. Therefore, a running cost becomes high.

Further, the material PI 2 showing excellent cleaning characteristics has a maximum folding resistance of 52. Accordingly, if the cleaning media PC has a folding resistance of greater than or equal to 1 and less than or equal to 52, excellent cleaning performance can be maintained for a long period of time.

Further, among the cleaning media PC where the brittle fracture occurs as shown in FIG. 22A, the cleaning medium PC made of acrylic 1 shows a maximum folding resistance of 9. Accordingly, it can be classified that the brittle fracture as shown in FIG. 22A occurs in the cleaning media PC showing a folding resistance of greater than or equal to 0 and less than or equal to 9, and that the brittle fracture as shown in FIG. 22B occurs in the cleaning media PC having a folding resistance of greater than or equal to 10 and less than or equal to 52.

Further, the cleaning medium PC made of acrylic 2 showing a minimum folding resistance of 0 is extremely brittle and thus does not withstand its long-time use. On the other hand, the cleaning medium PC made of acrylic 1 having a minimum folding resistance of 1 could maintain its cleaning performance for a long period of time as shown in table 1.

**(Table 1)**

| NO. | CLEANING MEDIUM | | | | SAMPLE PROCESSING NUMBER | |
|---|---|---|---|---|---|---|
| | MATERIAL | THICKNESS (*µ*) | FOLDING RESISTANCE | PENCIL HARDNESS | 1 | 30 |
| 1 | POLYOLEFIN | 155 | 0 | B | A | E |
| 2 | GLASS | 100 | 0 | 9H 0R GREATER | D | E |
| 3 | ACRYLIC② | 125 | 2 | H~F | C | E |
| 4 | ACRYLIC① | 125 | 4 | 2H | C | C |
| 5 | TAC (TRIACETATE)① | 120 | 24 | H | C | C |
| 6 | TAC (TR IACETATE)② | 105 | 32 | 2H | C | C |
| 7 | PI (POLYIMIDE)② | 135 | 45 | 2H | C | C |
| 8 | PS (POLYSTYRENE) ① | 130 | 88 | HB | B | A |
| 9 | SUS (STAINLESS STEEL) | 20 | 95 | 9H 0R GREATER | D | A |
| 10 | PS (POLYSTYRENE)② | 150 | 190 | 4B | A | A |
| 11 | PI (POLYIMIDE) ① | 125 | 3250 | F | B | A |
| 12 | PE (POLYETHYLENE) | 100 | 10000 0R GREATER | 6B | A | A |
| 13 | TPX | 100 | 10000 0R GREATER | 4B | A | A |
| 14 | PET | 110 | 10000 0R GREATER | H | B | A |

| | | | | | | |
|---|---|---|---|---|---|---|
| NOTE: "B" and "A" indicate that the flaky medium is curled due to its plastic deformation. "A" indicates that the edges of cleaning medium become limp due to its plastic deformation. | | | | | | |

**(Table 2)**

| N0. | MATERIAL | AVERAGE FOLDING RESISTANCE | MAXIMUM FOLDING RESISTANCE | MINIMUM FOLDING RESISTANCE |
|---|---|---|---|---|
| 3 | ACRYLIC② | 2 | 8 | 0 |
| 4 | ACRYLIC① | 4 | 9 | 1 |
| 7 | PI① | 45 | 52 | 41 |
| 8 | PS① | 88 | 115 | 65 |

It is found from the average of the folding resistance of the respective cleaning media shown in table 1 that it is preferred to use the cleaning media PC having a pencil hardness greater than or equal to that of film-like extraneous matter and having a folding resistance of greater than or equal to 2 and less than or equal to 45 so as to more accurately eliminate the film-like extraneous matter such as flux.

As the cleaning media PC, the cleaning pieces having a thickness of 0.1 mm and a length of 5 mm in height and width (area: 25 mm²) and made of an acrylic resin were used.

As the cleaning object, an aluminum flat plate assumed to be a dip pallet, in which flux was fixed on its one side so as to form a layer at a thickness of about 0.5 through I mm, was used. The fixed flux layer was not removed at all even if the front surface of the flux layer was scratched by a nail.

In the upper housing, about 2 g of the cleaning medium PC was held as described above. In this state, the rotating airflow was generated in such a manner that the opening was closed by the "palm of the hand." The cleaning pieces were scattered by the rotating airflow and brought into collision-contact with the palm of the hand. At this time, the operator felt a "considerable pain" on the palm of the hand, but the palm was not injured.

The opening was brought into contact with the layer of the flux fixed to the aluminum flat plate to perform the cleaning operation described above. Consequently, the fixed flux was completely eliminated from part corresponding to the area of the opening, i.e., 45 mm x 60 mm (2700 mm²), in about 10 seconds. Further, when the opening was opened, no cleaning medium PC leaked from the opening.

It is found from the above results that the dry cleaning device according to the embodiment of the present invention has an excellent cleaning function.

### (Supplementation)

Below, a description is given of a supplementation of the embodiment of the present invention.

The cleaning housing causes the rotating airflow to be generated inside it. Therefore, the internal space of the cleaning housing has the "successive inner wall" that "facilitates the generation of the rotating airflow" and causes the airflow to be circularly flowed along the inner wall of the housing, and is preferably formed to have a polygonal shape, a circular shape, or the like as its cross sectional shape.

As described above, since the "ventilation path" of the cleaning housing has the function of straightening the "flow of the air introduced from the outside," the ventilation path is generally formed into a "pipe shape having a smooth inside surface." In addition, for example, a "plate-like flow path controlling plate having a smooth surface" can also achieve the effect of straightening the air in a direction along the surface of the plate. Therefore, the "ventilation path can be constituted of the plate-like flow path controlling unit."

Further, the "flow of the air" in the ventilation path is generally straight. However, even if the flow of the air is curved drawing a gentle curve where flow path resistance is small, the ventilation path still has the function of straightening the flow of the air. Therefore, the shape of the ventilation path is not limited to a line.

The "cross section orthogonal to the ventilation path" at the inside surface of the ventilation path may have various shapes such as a circle, an ellipse, and a slit.

The air introduced via the ventilation path forms the rotating airflow as described above. However, since the cleaning housing is suctioned via the porous unit, some of the air forming the rotating airflow is discharged to the outside of the housing via the porous unit.

However, since the outside air is continuously introduced via the ventilation path, the introduced air is always merged with the rotating airflow. Thus, the rotating airflow is steadily formed.

The rotating airflow is circulated inside the cleaning housing many times until it is suctioned into the suction unit via the porous unit. Therefore, it is found according to the airflow simulation that the flow amount of the rotating airflow reaches five through six times as great as the flow amount of the air flowed via the ventilation path.

Here, a description is given of the "flaky cleaning pieces" constituting the "cleaning medium."

The cleaning pieces are thin shapes as expressed by the term "flaky" and small in size as expressed by the term "pieces."

As described above, examples of the materials of the cleaning pieces may include a resin such as "polycarbonate, polyethylene terephthalate, and an acrylic cellulose resin," a paper, fabric, mineral such as mica, ceramics, glass, and metal.

Among them, a suitable one can be selected and used according to the degree of the adherence of a stain attached to the cleaning object Co. For example, if the adherence of the stain attached to the cleaning object CO is low, the "soft cleaning pieces" made of a paper or fabric may be used.

The "flaky cleaning pieces" bring about the following effects.
(1) "Air resistance in the direction of the surfaces of the cleaning pieces" is high relative to the weights of the cleaning pieces, easily floated, scattered, and accelerated by relatively small airflow, and high in followability with respect to the rotating airflow.
(2) Since the cleaning pieces are thin, they can penetrate into the narrow regions of the front surface of the cleaning object CO and eliminate extraneous matter (stain) even though the front surface of the cleaning object CO is complicated.
(3) Since the cleaning pieces are small in size and thickness, the amount of the material used for the cleaning medium can be suppressed.
(4) Due to a scraping effect by the "thick edges" of the flaky cleaning pieces, a stain having intensive adherence can be well eliminated.
(5) When the stain attached to the cleaning object CO is separated from the cleaning object CO in the form of "powder," a difference in area between the "powder stain" and the cleaning pieces becomes large. Therefore, separation by the porous unit is facilitated. In particular, assume that the cleaning pieces are made of small pieces a "resin film," if the front surfaces of the cleaning pieces are made smooth, separation between the cleaning pieces and stain pieces is facilitated.

If the "adherence of the stain" is low, the cleaning pieces made of a resin film or the like having "flexibility" may be used.

The "cleaning pieces having flexibility" have the following effects.
(6) When the cleaning pieces having flexibility are brought into collision-contact with the cleaning object CO, they absorb some of an impact due to its deflection. Therefore, the cleaning object is less likely to be damaged.
(7) Since the cleaning pieces having flexibility are brought into line-contact with and brought into surface-contact with the cleaning object CO, they can eliminate the extraneous matter (stain) attached to a larger area for each collision.

Among the effects "1 through 7," the effects "1, 2, 3, 6, and 7" are excellent compared to a cleaning method using conventionally known "shot blasting," and the effects "4, 5, and 6" are excellent compared to a cleaning method using "powder blasting such as baking soda."

Further, the effects "2, 3, 4, and 5" are excellent compared to a cleaning method using elastic blasting such as rubber.

The shapes of the "cleaning pieces" constituting the cleaning medium are not particularly limited. The shapes of the cleaning pieces can be appropriately selected according to the surface shape of the cleaning object CO, the type of a stain, the degree of the adherence of the stain, or the like.

For example, the "rectangular cleaning pieces" can be easily formed and manufactured at low cost. If it is desired to clean the pore parts of the cleaning object CO in the cleaning operation, the cleaning pieces preferably have a "shape such as a strip, a cross, and a star making an acute angle." If it is desired to minimize dust occurring from the "chips of the cleaning medium" along with the cleaning operation, the cleaning pieces preferably have a circular shape.

Note that the cleaning pieces constituting the "concurrently-used cleaning medium" are not necessarily the same in size, shape, thickness, or the like each other.

If the "cleaning pieces" made of the material having flexibility have an area S of 200 mm² or greater, the above effect "3" cannot be properly achieved, the scattering of the cleaning pieces by the rotating airflow becomes difficult, and a large suction force of scattering the cleaning pieces is required.

Conversely, if the cleaning pieces have an area S of 1 mm² or less, the above effects "4, 5, and 6" cannot be easily achieved.

As described above, in order to "more properly achieve" the above effects, the cleaning pieces preferably have an area in the range of 2 mm² ≤ S ≤ 100 mm².

If the cleaning pieces have a thickness D of 0.5 mm or greater, the rigidity of the cleaning pieces becomes great, and the flexibility of the cleaning pieces is reduced. Consequently, the "effects (6 and 7) due the flexibility" are weakened.

If the cleaning pieces have a thickness of 0.03 mm or less, the firmness of the cleaning pieces is reduced and an "impact given to a stain" when the cleaning pieces are brought into collision-contact with the cleaning object CO becomes small. Consequently, the cleaning effects are weakened. In addition, the cleaning pieces are brought into close contact with the inner wall or the like of the cleaning housing, and thus are not easily scattered again. Moreover, the cleaning pieces are firmly attached to the porous unit and likely to cause the clogging of the porous unit.

The cleaning pieces preferably have a thickness of 0.2 mm or less and 0.05 mm or greater in order to achieve the more excellent cleaning effects.

Note that in a case where the cleaning pieces have a small area, even if the lower limit of the thickness of the cleaning pieces is 0.05 mm or less, it is possible to prevent with desired flexibility given to the cleaning pieces the "problem in which the cleaning pieces are not easily scattered again and the problem in which the cleaning pieces clog the porous unit" resulting from the reduced firmness of the cleaning pieces.

## Claims

1. A dry cleaning housing (10) configured so that when in use the housing causes a cleaning medium (PC) to be scattered by an airflow and brings the cleaning medium (PC) into contact with a cleaning object (CO) to clean the cleaning object (CO), the dry cleaning housing (10) comprising:
an internal space where the cleaning medium (PC) is scattered;
an opening (10E) configured to be brought into contact with the cleaning object (CO) to cause the cleaning medium (PC) to collide with the cleaning object (CO);
a ventilation path (10F) configured to supply air from an outside to the internal space;
a suction port configured to suction the air introduced into the internal space via the ventilation path (10F) to generate a rotating airflow inside the internal space; and
a porous unit (10C) configured to allow a substance eliminated from the cleaning object to pass through, wherein
an exit of the ventilation path (10F) is arranged at a position such that a static pressure near the exit of the ventilation path (10F) becomes equal to or gets close to an atmospheric pressure when the opening is moved away from a front surface of the cleaning object.

2. A dry cleaning housing (10) configured so that when in use the housing causes a cleaning medium (PC) to be scattered by an airflow and brings the cleaning medium (PC) into contact with a cleaning object (CO) to clean the cleaning object (CO), the dry cleaning housing comprising:
an internal space where the cleaning medium (PC) is scattered;
an opening (10E) configured to be brought into contact with the cleaning object (CO) to cause the cleaning medium (PC) to collide with the cleaning object (CO);
a ventilation path (10F) configured to supply air from an outside to the internal space;
a suction port configured to suction the air introduced into the internal space via the ventilation path (10F) to generate a rotating airflow inside the internal space;
a porous unit (10C) configured to allow a substance eliminated from the cleaning object to pass through; and
a flow-path restricting member configured to surround the rotary axis of the rotating airflow.

3. The dry cleaning housing (10) according to claim 1 or 2, wherein
the ventilation path (10F) straightens the air from the outside toward the opening.

4. The dry cleaning housing (10) according to any one of claims 1 through 3, wherein
the porous unit (10C) is arranged at a surface orthogonal to a rotary axis of the rotating airflow.

5. The dry cleaning housing (10) according to any one of claims 1 through 4, wherein
the internal space has a rotating body shape, and
the ventilation path (10F) is positioned such that the airflow introduced via the ventilation path (10F) is formed into the rotating airflow at an angle close to an angle of a tangent line of the rotating body shape.

6. The dry cleaning housing (10) according to any one of claims 1 through 5, wherein,
in a state where an inside of the dry cleaning housing is suctioned via the suction port, a ratio of a flow amount of the air introduced when the opening is opened to a flow amount of the air introduced when the opening is closed, i.e., the flow amount of the air when the opening is opened/the flow amount of the air when the opening is closed, is less than or equal to 0.25.

7. The dry cleaning housing (10) according to any one of claims 1 through 6, further comprising:
an opening/closing valve configured to regulate a flow of the air flowing in the ventilation path (10F) in accordance with the static pressure inside the dry cleaning housing.

8. A dry cleaning device comprising:
the dry cleaning housing (10) according to any one of claims 1 through 7;
the cleaning medium as an aggregation of flaky cleaning pieces (PC) held inside the dry cleaning housing (10); and
suction unit configured to suction the inside of the dry cleaning housing via the suction port.

9. The dry cleaning device according to claim 8, wherein
the dry cleaning housing (10) is the dry cleaning housing according to claim 7, the dry cleaning device further comprising:
a controlling unit configured to control the opening/closing valve in accordance with the static pressure inside the dry cleaning housing.

10. The dry cleaning device according to claim 8 or 9, wherein the dry cleaning housing is capable of being manually handled in a state where the suction port is connected to the suction unit.

11. The dry cleaning device according to claim 8 or 9, further comprising:
a cleaning object holding unit configured to hold the cleaning object; and
a position and posture controlling unit configured to hold the dry cleaning housing (10) and control a position and a posture of the dry cleaning housing with respect to the cleaning object held by the cleaning object holding unit.

12. The dry cleaning device according to any one of claims 8 through 11, wherein
the flaky cleaning pieces are made of a flexible material, have an area S in a range of 1 mm² ≤ S ≤ 200 mm², and have a thickness D in a range of 0.03 mm ≤ D ≤ 0.5 mm.

13. A dry cleaning method that causes a cleaning medium as an aggregation of flaky cleaning pieces to be scattered by an airflow and brings the cleaning medium into contact with a cleaning object (CO) to clean the cleaning object (CO), the dry cleaning method comprising:
holding the cleaning medium inside the dry cleaning housing according to any one of claims 1 through 7;
bringing the opening of the dry cleaning housing (10E) into contact with the cleaning object (CO) so as to be closed;
suctioning the inside of the dry cleaning housing (10) via the suction port to generate a negative pressure inside the dry cleaning housing (10);
introducing the air from the outside into the inside of the dry cleaning housing via the ventilation path (10F) by the negative pressure to generate a rotating airflow inside the dry cleaning housing (10); and
causing the cleaning medium (PC) to be scattered by the rotating airflow and bringing the cleaning medium into contact with the front surface of the cleaning object (CO) closing the opening (10E) to perform a cleaning operation.

## Patentansprüche

1. Trockenreinigungsgehäuse (10), das so konfiguriert ist, dass das Gehäuse im Gebrauch bewirkt, dass ein Reinigungsmedium (PC) durch einen Luftstrom verstreut wird und das Reinigungsmedium (PC) mit einem Reinigungsobjekt (CO) in Kontakt bringt, um das Reinigungsobjekt (CO) zu reinigen, wobei das Trockenreinigungsgehäuse (10) Folgendes umfasst:
einen Innenraum, in dem das Reinigungsmedium (PC) verstreut ist;
eine Öffnung (10E), die konfiguriert ist, in Kontakt mit dem Reinigungsobjekt (CO) gebracht zu werden, um zu bewirken, dass das Reinigungsmedium (PC) mit dem Reinigungsobjekt (CO) zusammentrifft;
einen Lüftungspfad (10F), der konfiguriert ist, Luft von einem Außenraum dem Innenraum zuzuführen;
einen Sauganschluss, der konfiguriert ist, die Luft, die über den Lüftungspfad (10F) in den Innenraum eingeleitet worden ist, anzusaugen, um einen drehenden Luftstrom innerhalb des Innenraums zu erzeugen; und
eine poröse Einheit (10C), die konfiguriert ist, einem Stoff, der aus dem Reinigungsobjekt beseitigt worden ist, zu ermöglichen, sich hindurch zu bewegen, wobei
ein Ausgang des Lüftungspfads (10F) so an einer Position angeordnet ist, dass ein statischer Druck in der Nähe des Ausgangs des Lüftungspfads (10F) gleich einem atmosphärischen Druck ist oder sich diesem annähert, wenn die Öffnung von einer vorderen Oberfläche des Reinigungsobjekts weg bewegt worden ist.

2. Trockenreinigungsgehäuse (10), das so konfiguriert ist, dass das Gehäuse im Gebrauch bewirkt, dass ein Reinigungsmedium (PC) durch einen Luftstrom verstreut wird und das Reinigungsmedium (PC) mit einem Reinigungsobjekt (CO) in Kontakt bringt, um das Reinigungsobjekt (CO) zu reinigen, wobei das Trockenreinigungsgehäuse Folgendes umfasst:
einen Innenraum, in dem das Reinigungsmedium (PC) verstreut ist;
eine Öffnung (10E), die konfiguriert ist, in Kontakt mit dem Reinigungsobjekt (CO) gebracht zu werden, um zu bewirken, dass das Reinigungsmedium (PC) mit dem Reinigungsobjekt (CO) zusammentrifft;
einen Lüftungspfad (10F), der konfiguriert ist, Luft von einem Außenraum dem Innenraum zuzuführen;
einen Sauganschluss, der konfiguriert ist, die Luft, die über den Lüftungspfad (10F) in den Innenraum eingeleitet worden ist, anzusaugen, um einen drehenden Luftstrom innerhalb des Innenraums zu erzeugen;
eine poröse Einheit (10C), die konfiguriert ist, einem Stoff, der aus dem Reinigungsobjekt beseitigt worden ist, zu ermöglichen, sich hindurch zu bewegen; und
ein Durchflusspfad-Einschnürungselement, das konfiguriert ist, die Drehachse des drehenden Luftstroms zu umgeben.

3. Trockenreinigungsgehäuse (10) nach Anspruch 1 oder 2, wobei der Lüftungspfad (10F) die Luft von dem Außenraum in Richtung der Öffnung ausrichtet.

4. Trockenreinigungsgehäuse (10) nach einem der Ansprüche 1 bis 3, wobei
die poröse Einheit (10C) bei einer Oberfläche, die orthogonal zu einer Drehachse des drehenden Luftstroms ist, angeordnet ist.

5. Trockenreinigungsgehäuse (10) nach einem der Ansprüche 1 bis 4, wobei
der Innenraum eine drehende Körperform besitzt und
der Lüftungspfad (10F) so positioniert ist, dass der Luftstrom, der über den Lüftungspfad (10F) eingeleitet worden ist, in den drehenden Luftstrom unter einem Winkel, der nahe einem Winkel einer Tangentenlinie der drehenden Körperform ist, geformt wird.

6. Trockenreinigungsgehäuse (10) nach einem der Ansprüche 1 bis 5, wobei
in einem Zustand, in dem ein Innenraum des Trockenreinigungsgehäuses über den Sauganschluss abgesaugt wird, ein Verhältnis einer Durchflussmenge der Luft, die eingeleitet wird, wenn die Öffnung geöffnet ist, zu einer Durchflussmenge der Luft, die eingeleitet wird, wenn die Öffnung geschlossen ist, d. h. die Durchflussmenge der Luft, wenn die Öffnung geöffnet ist, geteilt durch die Durchflussmenge der Luft, wenn die Öffnung geschlossen ist, kleiner oder gleich 0,25 ist.

7. Trockenreinigungsgehäuse (10) nach einem der Ansprüche 1 bis 6, das ferner Folgendes umfasst:
ein Öffnungs-/ Schließventil, das konfiguriert ist, einen Strom der Luft, die gemäß dem statischen Druck innerhalb des Trockenreinigungsgehäuses in dem Lüftungspfad (10F) strömt, zu regulieren.

8. Trockenreinigungsvorrichtung, die Folgendes umfasst:
das Trockenreinigungsgehäuse (10) nach einem der Ansprüche 1 bis 7;
das Reinigungsmedium als eine Anhäufung von flockigen Reinigungsstücken (PC), die innerhalb des Trockenreinigungsgehäuses (10) gehalten werden; und
eine Saugeinheit, die konfiguriert ist, das Innere des Trockenreinigungsgehäuses über den Sauganschluss abzusaugen.

9. Trockenreinigungsvorrichtung nach Anspruch 8, wobei
das Trockenreinigungsgehäuse (10) das Trockenreinigungsgehäuse nach Anspruch 7 ist, wobei die Trockenreinigungsvorrichtung ferner Folgendes umfasst:
eine Steuereinheit, die konfiguriert ist, das Öffnungs-/ Schließventil gemäß dem statischen Druck innerhalb des Trockenreinigungsgehäuses zu steuern.

10. Trockenreinigungsvorrichtung nach Anspruch 8 oder 9, wobei
das Trockenreinigungsgehäuse in einem Zustand, in dem der Sauganschluss mit der Saugeinheit verbunden ist, manuell bedient werden kann.

11. Trockenreinigungsvorrichtung nach Anspruch 8 oder 9, die ferner Folgendes umfasst:
eine Reinigungsobjekt-Halteeinheit, die konfiguriert ist, das Reinigungsobjekt zu halten; und
eine Positions-und-Stellungs-Steuereinheit, die konfiguriert ist, das Trockenreinigungsgehäuse (10) zu halten und eine Position und eine Stellung des Trockenreinigungsgehäuses in Bezug auf das Reinigungsobjekt, das durch die Reinigungsobjekt-Halteeinheit gehalten wird, zu steuern.

12. Trockenreinigungsvorrichtung nach einem der Ansprüche 8 bis 11, wobei
die flockigen Reinigungsstücke aus einem flexiblen Material hergestellt sind, eine Fläche S im Bereich zwischen 1 mm² ≤ S ≤ 200 mm² besitzen und eine Dicke D im Bereich zwischen 0,03 mm ≤ D ≤ 0,5 mm besitzen.

13. Trockenreinigungsverfahren, das bewirkt, dass ein Reinigungsmedium als eine Anhäufung von flockigen Reinigungsstücken durch einen Luftstrom verstreut wird und das Reinigungsmedium mit einem Reinigungsobjekt (CO) in Kontakt bringt, um das Reinigungsobjekt (CO) zu reinigen, wobei das Trockenreinigungsverfahren Folgendes umfasst:
Halten des Reinigungsmediums innerhalb des Trockenreinigungsgehäuses, nach einem der Ansprüche 1 bis 7;
Herstellen eines Kontakts zwischen der Öffnung des Trockenreinigungsgehäuses (10E) und dem Reinigungsobjekt (CO), derart, dass sie geschlossen ist;
Absaugen des Inneren des Trockenreinigungsgehäuses (10) über den Sauganschluss, um einen negativen Druck innerhalb des Trockenreinigungsgehäuses (10) zu erzeugen;
Einleiten der Luft von dem Außenraum in das Innere des Trockenreinigungsgehäuses über den Lüftungspfad (10F) durch den negativen Druck, um einen drehenden Luftstrom innerhalb des Trockenreinigungsgehäuses (10) zu erzeugen; und
Bewirken, dass das Reinigungsmedium (PC) durch den drehenden Luftstrom verstreut wird, und Herstellen eines Kontakts zwischen dem Reinigungsmedium und der vorderen Oberfläche des Reinigungsobjekts (CO), das die Öffnung (10E) schließt, um einen Reinigungsvorgang durchzuführen.

## Revendications

1. Habitacle de nettoyage à sec (10) configuré de sorte que lors de l'utilisation l'habitacle occasionne le fait qu'un milieu de nettoyage (PC) soit dispersé par un écoulement d'air et mette le milieu de nettoyage (PC) en contact avec un objet de nettoyage (CO) pour nettoyer l'objet de nettoyage (CO), l'habitacle de nettoyage à sec (10) comprenant :
un espace interne dans lequel le milieu de nettoyage (PC) est dispersé ;
une ouverture (10E) configurée pour être mise en contact avec l'objet de nettoyage (CO) pour occasionner le fait que le milieu de nettoyage (PC) entre en collision avec l'objet de nettoyage (CO) ;
une trajectoire de ventilation (10F) configurée pour introduire de l'air à partir d'un extérieur vers l'espace interne ;
un orifice d'aspiration configuré pour aspirer l'air introduit dans l'espace interne via la trajectoire de ventilation (10F) pour générer un écoulement d'air rotatif à l'intérieur de l'espace interne ; et
une unité poreuse (10C) configurée pour permettre à une substance éliminée de l'objet de nettoyage de passer à travers celle-ci, dans lequel
une sortie de la trajectoire de ventilation (10F) est disposée à une position telle qu'une pression statique proche de la sortie de la trajectoire de ventilation (10F) soit égale à ou devienne proche de la pression atmosphérique lorsque l'ouverture est éloignée d'une surface avant de l'objet de nettoyage.

2. Habitacle de nettoyage à sec (10) configuré de sorte que lors de l'utilisation l'habitacle occasionne le fait qu'un milieu de nettoyage (PC) soit dispersé par un écoulement d'air et mette le milieu de nettoyage (PC) en contact avec un objet de nettoyage (CO) pour nettoyer l'objet de nettoyage (CO), l'habitacle de nettoyage à sec comprenant :
un espace interne dans lequel le milieu de nettoyage (PC) est dispersé ;
une ouverture (10E) configurée pour être en contact avec l'objet de nettoyage (CO) pour occasionner le fait que le milieu de nettoyage (PC) entre en collision avec l'objet de nettoyage (CO) ;
une trajectoire de ventilation (10F) configurée pour introduire de l'air à partir d'un extérieur dans l'espace interne ;
un orifice d'aspiration configuré pour aspirer l'air introduit dans l'espace interne via la trajectoire de ventilation (10F) pour générer un écoulement d'air rotatif à l'intérieur de l'espace interne ;
une unité poreuse (10C) configurée pour permettre à une substance éliminée de l'objet de nettoyage de passer à travers celle-ci ; et
un élément restreignant la trajectoire d'écoulement configuré pour entourer l'axe rotatif de l'écoulement d'air rotatif.

3. Habitacle de nettoyage à sec (10) selon la revendication 1 ou 2, dans lequel
la trajectoire de ventilation (10F) redresse l'air à partir de l'extérieur vers l'ouverture.

4. Habitacle de nettoyage à sec (10) selon l'une quelconque des revendications 1 à 3, dans lequel
l'unité poreuse (10C) est disposée sur une surface perpendiculaire à un axe rotatif de l'écoulement d'air rotatif.

5. Habitacle de nettoyage à sec (10) selon l'une quelconque des revendications 1 à 4, dans lequel
l'espace interne présente une forme de corps en rotation, et
la trajectoire de ventilation (10F) est disposée de sorte que l'écoulement d'air introduit via la trajectoire de ventilation (10F) est formé dans l'écoulement d'air rotatif à un angle proche d'un angle d'une ligne de tangente de la forme de corps en rotation.

6. Habitacle de nettoyage à sec (10) selon l'une quelconque des revendications 1 à 5, dans lequel,
dans un état dans lequel un intérieur de l'habitacle de nettoyage à sec est aspiré via l'orifice d'aspiration, un rapport d'une quantité d'écoulement de l'air introduit lorsque l'ouverture est ouverte à une quantité d'écoulement de l'air introduit lorsque l'ouverture est fermée, c'est-à-dire, la quantité d'écoulement de l'air lorsque l'ouverture est ouverte/la quantité d'écoulement de l'air lorsque l'ouverture est fermée, est inférieur ou égal à 0,25.

7. Habitacle de nettoyage à sec (10) selon l'une quelconque des revendications 1 à 6, comprenant de plus :
une vanne d'ouverture/fermeture configurée pour réguler un écoulement de l'air s'écoulant dans la trajectoire de ventilation (10F) selon la pression statique à l'intérieur de l'habitacle de nettoyage à sec.

8. Dispositif de nettoyage à sec comprenant :
l'habitacle de nettoyage à sec (10) selon l'une quelconque des revendications 1 à 7 ;
le milieu de nettoyage comme une agrégation de morceaux de nettoyage en paillettes (PC) maintenus à l'intérieur de l'habitacle de nettoyage à sec (10) ; et
une unité d'aspiration configurée pour aspirer l'intérieur de l'habitacle de nettoyage à sec via l'orifice d'aspiration.

9. Dispositif de nettoyage à sec selon la revendication 8, dans lequel
l'habitacle de nettoyage à sec (10) est l'habitacle de nettoyage à sec selon la revendication 7, le dispositif de nettoyage à sec comprenant de plus :
une unité de contrôle configurée pour contrôler la vanne d'ouverture/fermeture selon la pression statique à l'intérieur de l'habitacle de nettoyage à sec.

10. Dispositif de nettoyage à sec selon la revendication 8 ou 9, dans lequel
l'habitacle de nettoyage à sec peut être manipulé manuellement dans un état dans lequel l'orifice d'aspiration est connecté à l'unité d'aspiration.

11. Dispositif de nettoyage à sec selon la revendication 8 ou 9, comprenant de plus :
une unité de maintien d'objet de nettoyage configurée pour maintenir l'objet de nettoyage ; et
une unité de contrôle de position et de posture configurée pour maintenir l'habitacle de nettoyage à sec (10) et contrôler une position et une posture de l'habitacle de nettoyage à sec par rapport à l'objet de nettoyage maintenu par l'unité de maintien d'objet de nettoyage.

12. Dispositif de nettoyage à sec selon l'une quelconque des revendications 8 à 11, dans lequel
les morceaux de nettoyage en paillettes sont constitués d'un matériau flexible, présentent une surface S dans l'intervalle de 1 mm² ≤ S ≤ 200 mm², et présentent une épaisseur D dans l'intervalle de 0,03 mm ≤ D ≤ 0,5 mm.

13. Procédé de nettoyage à sec qui occasionne le fait qu'un milieu de nettoyage comme une agrégation de morceaux de nettoyage en paillettes soit dispersé par un écoulement d'air et mette le milieu de nettoyage en contact avec un objet de nettoyage (CO) pour nettoyer l'objet de nettoyage (CO), le procédé de nettoyage à sec comprenant :
le maintien du milieu de nettoyage à l'intérieur de l'habitacle de nettoyage à sec selon l'une quelconque des revendications 1 à 7 ;
la mise en contact de l'ouverture de l'habitacle de nettoyage à sec (10E) avec l'objet de nettoyage (CO) afin d'être fermée ;
l'aspiration de l'intérieur de l'habitacle de nettoyage à sec (10) via l'orifice d'aspiration pour produire une pression négative à l'intérieur de l'habitacle de nettoyage à sec (10) ;
l'introduction de l'air à partir de l'extérieur dans l'intérieur de l'habitacle de nettoyage à sec via la trajectoire de ventilation (10F) par la pression négative pour produire un écoulement d'air rotatif à l'intérieur de l'habitacle de nettoyage à sec (10) ; et
le fait d'occasionner que le milieu de nettoyage (PC) soit dispersé par l'écoulement d'air rotatif et la mise en contact du milieu de nettoyage avec la surface avant de l'objet de nettoyage (CO) fermant l'ouverture (10E) pour réaliser une opération de nettoyage.
